# EUROPÄISCHE PATENTSCHRIFT

(11) **EP 3 994 762 B1**
(45) Veröffentlichungstag und Bekanntmachung des Hinweises auf die Patenterteilung: **21.05.2025**
(21) Anmeldenummer: 20737141.0
(22) Anmeldetag: 03.07.2020
(51) Int. Cl.: H01M 50/50, B60L 58/26, H01M 10/04, H01M 10/613, H01M 10/643, H01M 10/654, H01M 10/6557

(54) **ZELLVERBINDER FÜR ZELLEN UND ZELLMODULE UND BATTERIEMODULE MIT ZELLEN**
CELL CONNECTOR FOR CELLS, CELL MODULES, AND BATTERY MODULES COMPRISING CELLS
CONNECTEUR DE CELLULES, MODULES DE CELLULES ET MODULES DE BATTERIE DOTÉS DE CELLULES

(30) Priorität: 04.07.2019 DE 102019118162
(43) Veröffentlichungstag der Anmeldung: 11.05.2022
(73) Patentinhaber: fischer Power Solutions GmbH, 77855 Achern-Fautenbach (DE)
(72) Erfinder: FISCHER, Julian, 77876 Kappelrodeck (DE)
(74) Vertreter: Gesthuysen Patentanwälte
(86) Internationale Anmeldenummer: PCT/EP2020/068866
(87) Internationale Veröffentlichungsnummer: WO 2021/001546

(56) Entgegenhaltungen:
- EP-A1- 2 996 189
- EP-A1- 3 018 732
- EP-A1- 3 499 602
- GB-A- 2 532 724
- US-A1- 2013 011 719

## Beschreibung

Die Erfindung betrifft Zellverbinder zur elektrischen Verschaltung einer ersten und einer zweiten Zelle. Und zwar zum einen einen Zellverbinder zur elektrischen Parallelschaltung und zum anderen einen Zellverbinder zur elektrischen Serienschaltung der ersten und der zweiten Zelle. Der Oberbegriff der Ansprüche 1 und 7, welche sich jeweils auf einen Zellverbinder beziehen, basiert auf der EP 3 018 732.

Weiter betrifft die Erfindung ein Zellmodul mit mindestens zwei Zellen und mindestens einem Zellverbinder, wobei die mindestens zwei Zellen durch den mindestens einen Zellverbinder elektrisch miteinander verschaltet sind. Darüber hinaus betrifft die Erfindung ein Batteriemodul mit mindestens zwei Zellmodulen.

Eine Zelle weist einen elektrischen Energiespeicher und ein hohlzylinderförmiges Gehäuse auf. Der elektrische Energiespeicher ist im Gehäuse angeordnet und das Gehäuse umschließt den elektrischen Energiespeicher dicht. Der elektrische Energiespeicher weist einen ersten Energiespeicherpol und einen zweiten Energiespeicherpol auf. Das Gehäuse weist einen Außenmantel, einen Innenmantel, eine erste Kappe und eine zweite Kappe auf.

Das Gehäuse der Zelle hat die Form eines Hohlzylinders. Unter einem Hohlzylinder wird ein allgemeiner Hohlzylinder verstanden. Ein allgemeiner Hohlzylinder ist durch eine Außenmantelfläche, Innenmantelfläche, eine erste Grundfläche und eine zweite Grundfläche bestimmt, wobei die Grundflächen die Bereiche zwischen Innenmantelfläche und Außenmantelfläche abschließen. Ein allgemeiner Hohlzylinder kann nicht nur senkrecht, sondern auch schief sein. Auch kann er nicht nur Grundflächen mit kreisrunden oder ovalen, sondern auch mit mehreckigen Querschnittskonturen aufweisen. Insbesondere kann das hohlzylinderförmige Gehäuse auch ein Prisma sein. Beim Gehäuse bildet der Außenmantel die Außenmantelfläche, der Innenmantel die Innenmantelfläche, die erste Kappe, die erste Grundfläche und die zweite Kappe die zweite Grundfläche.

Das Gehäuse umschließt den im Gehäuse angeordneten elektrischen Energiespeicher dicht. Dabei bedeutet dicht umschlossen zum einen, dass der elektrische Energiespeicher gegen Umwelteinflüsse geschützt ist, sodass er in seiner Funktionalität nicht beeinträchtigt ist, und zum anderen, dass vom elektrischen Energiespeicher keine Gefahren für die Umwelt ausgehen.

Die beiden Energiespeicherpole des elektrischen Energiespeichers werden auch als Pluspol und Minuspol bezeichnet.

Eine Zelle oder mehrere miteinander elektrisch verschaltete Zellen werden zur Versorgung von elektrischen Geräten mit elektrischer Energie verwendet. Bei den elektrischen Geräten handelt es sich zum Beispiel um Smartphones, Laptops und Automobile.

Aus der Praxis bekannte gattungsgemäße Zellen sind zum Beispiel Lithium-Ionen-Rundzellen. Eine solche Rundzelle weist ein senkrechtes hohlzylinderförmiges Gehäuse mit einem Innenmantel und einem Außenmantel auf, wobei der Innenmantel und der Außenmantel kreisrunde Querschnittskonturen haben. Die beiden Kappen sind an den Innenmantel und an den Außenmantel angepasst. Der elektrische Energiespeicher ist im Gehäuse angeordnet und oftmals um den Innenmantel gewickelt. Der erste Energiespeicherpol des elektrischen Energiespeichers ist mit der ersten Kappe elektrisch verbunden und der zweite Energiespeicherpol ist mit der zweiten Kappe elektrisch verbunden. Eine elektrische Kontaktierung der Zellen erfolgt demnach lediglich über die beiden Kappen, wobei die eine Kappe den Minuspol und die andere Kappe den Pluspol darstellt.

Mehrere gattungsgemäße Zellen können elektrisch seriell oder parallel verschaltet sein. Zur elektrisch seriellen Verschaltung einer ersten und einer zweite Zelle sind diese vorzugsweise auch geometrisch seriell angeordnet, sodass die erste Kappe der ersten Zelle und die zweite Kappe der zweiten Zelle einander gegenüberliegen. Die erste Kappe und die zweite Kappe sind durch einen Zellverbinder elektrisch miteinander verschaltet. Zur elektrisch parallelen Verschaltung einer ersten und einer zweiten Zelle sind diese vorzugsweise auch geometrisch parallel angeordnet, sodass die erste Kappe der ersten Zelle und die erste Kappe der zweiten Zelle nebeneinander liegen. Die beiden ersten Kappen sind durch einen Zellverbinder elektrisch miteinander verbunden. Zwar sind auch weitere geometrische Anordnungen von Zellen bei deren elektrisch serieller oder paralleler Verschaltung bekannt, jedoch erfordern diese aufwendigere Zellverbinder. Somit beeinflusst die Art der elektrischen Verschaltung von Zellen deren geometrische Anordnung und die Orientierung der Zellen in dieser Anordnung. Das bedeutet einen Symmetrieverlust und reduziert die Packungsdichte der Zellen. Die Orientierung von Zellen bezieht sich auf die Abfolge ihrer Kappen zueinander, also auf die Abfolge der Plus- und Minuspole. Das ist eine Einschränkung, welche einen Nachteil darstellt.

Die Temperatur des elektrischen Energiespeichers in einer Zelle muss in einem vorgegebenen Temperaturbereich liegen, damit die maximal mögliche Leistungsfähigkeit des elektrischen Energiespeichers gegeben ist und die maximal mögliche Lebensdauer des elektrischen Energiespeichers erreicht wird. Jedoch entsteht beim Laden und Entladen im elektrischen Energiespeicher Wärme. Aber auch der beim Laden und Entladen fließende Strom bewirkt Wärme in den Bereichen des Gehäuses und der Zellverbinder, durch welche der Strom fließt. Zu diesen Bereichen gehören insbesondere auch die elektrischen Kontaktstellen zwischen den Gehäusen der Zellen und den Zellverbindern. Die Umgebungstemperatur von Zellen und die beim Laden und Entladen von Zellen entstehende Wärme können ein Verlassen des vorgegebenen Temperaturbereichs bewirken. Steigt die Temperatur so weit an, dass sie außerhalb des vorgegebenen Temperaturbereichs liegt, besteht die Gefahr eines thermischen Durchgehens. Deshalb ist es notwendig, Zellen zu temperieren, sodass die Temperatur des elektrischen Energiespeichers in dem vorgegebenen Temperaturbereich liegt. Eine fehlende Temperierung oder eine Temperierung, welche den elektrischen Energiespeicher nicht im vorgegebenen Temperaturbereich hält, stellt somit einen weiteren Nachteil dar.

Bei der Zelle für die Verwendung mit den Zellverbindern bilden einerseits der Innenmantel und die erste Kappe einen ersten elektrischen Zellleiter und andererseits der Außenmantel und die zweite Kappe einen zweiten elektrischen Zellleiter. Dabei sind der erste elektrische Zellleiter und der zweite elektrische Zellleiter voneinander elektrisch isoliert. Weiter sind einerseits der erste Energiespeicherpol und der Innenmantel und andererseits der zweite Energiespeicherpol und der Außenmantel elektrisch miteinander verbunden. Der Innenmantel weist einerseits an der ersten Kappe eine erste Buchse und andererseits an der zweiten Kappe eine zweite Buchse für Stecker eines Zellverbinders auf. Vorzugsweise sind die Buchsen unterschiedlich groß ausgebildet, um ein Verpolen zu vermeiden. Weiter ist das Gehäuse derart ausgebildet, sodass ein Medium zur Temperierung der Zelle im Innenmantel aufnehmbar ist.

Die Hohlzylinderform des Gehäuses in Verbindung mit der Zuordnung der Elemente des Gehäuses, nämlich des Außenmantels, des Innenmantels, der ersten Kappe und der zweiten Kappe, zum ersten elektrischen Zellleiter und zweiten elektrischen Zellleiter und die elektrische Verbindung des Innenmantels mit dem ersten Energiespeicherpol und die Verbindung des Außenmantels mit dem zweiten Energiespeicherpol ermöglichen mit entsprechenden Zellverbindern sowohl eine elektrische Serienschaltung als auch eine elektrische Parallelschaltung von zwei geometrisch seriell angeordneten Zellen unabhängig von deren Orientierung. Die Orientierung der Zellen bezieht sich auf die Abfolge ihrer Kappen zueinander in der geometrisch seriellen Anordnung, also auf die Abfolge von ersten und zweiten Kappen.

Das Gehäuse und damit der Innenmantel ist zur Aufnahme eines Mediums zur Temperierung der Zelle ausgebildet. Wenn ein Medium im Innenmantel aufgenommen ist, dann dient dieses zur Zu- oder Abführung von Wärme, sodass der elektrische Energiespeicher im vorgegebenen Temperaturbereich ist. Für gewöhnlich ist der elektrische Energiespeicher unmittelbar auf dem Innenmantel angeordnet. Dadurch ist der thermische Widerstand zwischen elektrischem Energiespeicher und Innenmantel gering und eine effiziente Temperierung möglich. Vorzugsweise ist auch der Außenmantel und sind auch die Kappen auf dem Energiespeicher angeordnet, sodass der thermische Widerstand möglichst gering ist.

Weiter zeichnet sich das Gehäuse der Zelle durch seine Einfachheit aus. Denn die Komponenten des Gehäuses, nämlich der Außenmantel, der Innenmantel, die erste Kappe und die zweite Kappe, sind einfach herzustellen und zusammenzufügen. Dadurch sinken Herstellungsaufwand und Herstellungskosten.

Der Energiespeicher in der Zelle ist für gewöhnlich geschichtet, zum Beispiel durch Falten in sich oder durch Wickeln um den Innenmantel. Somit weist der Energiespeicher Schichten auf. Der Energiespeicher ähnelt insoweit einer Spule. Folglich weist der Energiespeicher auch eine entsprechende Induktivität auf, welche transiente Änderungen eines Stroms durch den Energiespeicher beeinträchtigt. Deshalb ist in einer Ausgestaltung der Zelle vorgesehen, dass einerseits der erste Energiespeicherpol und die erste Kappe und andererseits der zweite Energiespeicherpol und die zweite Kappe elektrisch miteinander verbunden sind. Somit sind also zum einen einerseits der Innenmantel und die erste Kappe und andererseits der erste Energiespeicherpol elektrisch verbunden und sind zum anderen einerseits der Außenmantel und die zweite Kappe und andererseits der zweite Energiespeicherpol elektrisch verbunden. Die elektrische Verbindung zwischen dem ersten Energiespeicherpol und der ersten Kappe ist derart, dass der erste Energiespeicherpol an vorzugsweise jeder Schicht des Energiespeichers und die erste Kappe miteinander elektrisch verbunden sind. Entsprechend ist die elektrische Verbindung zwischen dem zweiten Energiespeicherpol und der zweiten Kappe derart, dass der zweite Energiespeicherpol an vorzugsweise jeder Schicht des Energiespeichers und die zweite Kappe miteinander elektrisch verbunden sind. Diese Verbindung der Schichten des Energiespeichers bewirkt eine elektrische Parallelschaltung der Schichten, wodurch die Induktivität des Energiespeichers abnimmt. Durch die zusätzlichen elektrischen Verbindungen nimmt auch sowohl der elektrische als auch thermische Widerstand ab und steigt die maximale Stromstärke an.

In einer weiteren Ausgestaltung der Zelle ist vorgesehen, dass das Gehäuse derart ausgebildet ist, sodass ein Medium zur Temperierung der Zelle durch den Innenmantel strömbar ist. Bei diesem Medium handelt es sich vorzugsweise um ein flüssiges Medium. Ein flüssiges Medium zeichnet sich dadurch aus, dass es zum einen eine hohe Wärmekapazität hat und zum anderen im unmittelbaren Kontakt mit dem Innenmantel ist, sodass der thermische Widerstand zwischen Medium und Innenmangel gering ist. Ein Vorteil eines flüssigen Mediums gegenüber einem festen Medium ist, dass dem elektrischen Energiespeicher zu- oder abgeführte Wärme nicht nur durch die Wärmeleitfähigkeit des Mediums, sondern auch durch die Bewegung des strömenden Mediums transportiert wird.

Die erste Buchse und die zweite Buchse im Innenmantel des Gehäuses sind zur Aufnahme von Steckern von Zellverbindern ausgebildet. In einer weiteren Ausgestaltung der Zelle ist vorgesehen, dass die erste Buchse und/oder die zweite Buchse zum Stecken, Verschrauben, Verkleben, Verlöten, Verschweißen, Verquetschen oder Verpressen eines Steckers eines Zellverbinders ausgebildet sind bzw. ist. Ein Vorteil von Verschrauben und Stecken gegenüber Verkleben, Verlöten, Verschweißen, Verquetschen und Verpressen ist, dass diese Verbindungen leichter trennbar sind. Ein Vorteil vom Verkleben, Verlöten, Verschweißen, Verquetschen und Verpressen gegenüber Stecken und Verschrauben ist, dass diese Verbindungen für gewöhnlich einen geringeren elektrischen Widerstand aufweisen.

Das Gehäuse der Zelle kann verschiedenste elektrische Energiespeicher beherbergen. In einer Ausgestaltung der Zelle ist vorgesehen, dass der elektrische Energiespeicher ein Lithium-Ionen-, Natrium-Ionen-, Mangan-Ionen-, Magnesium-Ionen- oder Lithium-Schwefel-Energiespeicher ist. Alternativ dazu kann der elektrische Energiespeicher auch ein Kondensator wie z. B. ein Superkondensator sein. Ein Superkondensator ist z. B. ein Doppelschichtkondensator, Pseudokondensator oder Hybridkondensator.

Das Gehäuse mit Außenmantel, Innenmantel, erster Kappe und zweiter Kappe kann verschiedenste hohlzylinderförmige Geometrien aufweisen. In einer Ausgestaltung ist vorgesehen, dass der Innenmantel eine kreisförmige Querschnittskontur aufweist. In einer weiteren Ausgestaltung ist vorgesehen, dass der Außenmantel eine kreisförmige Querschnittskontur aufweist. In einer zur vorangehenden alternativen Ausgestaltung ist vorgesehen, dass der Außenmantel eine vieleckige Querschnittskontur aufweist.

Um die Herstellung weiter zu vereinfachen und infolgedessen die Herstellungskosten auch weiter zu senken, ist in einer weiteren Ausgestaltung vorgesehen, dass der erste elektrische Zellleiter einstückig ist und aus einem einzigen Stück hergestellt ist. In einer weiteren Ausgestaltung, welche die gleiche Zielrichtung wie die vorangehende hat, ist vorgesehen, dass der zweite elektrische Zellleiter einstückig ist und aus einem einzigen Stück hergestellt ist.

In einer weiteren Ausgestaltung ist vorgesehen, dass das Gehäuse, vorzugsweise der Außenmantel, eine Sollbruchstelle aufweist, sodass das Gehäuse an der Sollbruchstelle bricht, wenn der Energiespeicher eine vorgegebene Kraft auf die Sollbruchstelle ausübt. Der Energiespeicher übt zum Beispiel dann eine solche Kraft auf die Sollbruchstelle aus, wenn er thermisch durchgeht, zum Beispiel infolge einer elektrischen Überlastung.

Aufgabe der vorliegenden Erfindung ist eine Überwindung oder zumindest Abmilderung der dargelegten Nachteile.

Die Aufgabe ist zum einen durch einen Zellverbinder zur elektrischen Parallelschaltung mit den Merkmalen von Patentanspruch 1 gelöst. Der Zellverbinder weist einen ersten elektrischen Verbindungsleiter, einen zweiten elektrischen Verbindungsleiter und einen Verbindungsisolator auf und ist zur Anordnung zwischen einer Kappe einer ersten Zelle und einer Kappe einer zweiten Zelle ausgebildet. Zum einen sind der erste elektrische Verbindungsleiter und der Verbindungsisolator und zum anderen sind der zweite elektrische Verbindungsleiter und der Verbindungsisolator miteinander verbunden, sodass der erste elektrische Verbindungsleiter und der zweite elektrische Verbindungsleiter voneinander elektrisch isoliert sind. Der erste elektrische Verbindungsleiter weist einen ersten Stecker und einen zweiten Stecker auf, wobei der erste Stecker komplementär zu einer Buchse der ersten Zelle und der zweite Stecker komplementär zu einer Buchse der zweiten Zelle ausgebildet ist. Der erste elektrische Verbindungsleiter ist ausgebildet, die Buchse der ersten Zelle und die Buchse der zweiten Zelle elektrisch miteinander zu verbinden, und der zweite elektrische Verbindungsleiter ist ausgebildet, den zweiten elektrischen Zellleiter der ersten Zelle und den zweiten elektrischen Zellleiter der zweiten Zelle elektrisch miteinander zu verbinden. Der erste elektrische Verbindungsleiter inklusive dem ersten Stecker und dem zweiten Stecker ist zur Aufnahme eines Mediums zur Temperierung von Zellen ausgebildet.

Eine erste und eine zweite Zelle werden durch den Zellverbinder elektrisch parallel miteinander verschaltet und geometrisch seriell zueinander angeordnet, indem der erste Stecker des Zellverbinders in eine der Buchsen der ersten Zelle und der zweite Stecker in eine Buchse der zweiten Zelle eingebracht werden. Der erste Stecker kontaktiert über die Buchse den ersten elektrischen Zellleiter der ersten Zelle und der zweite Stecker kontaktiert über die Buchse den ersten elektrischen Zellleiter der zweiten Zelle elektrisch, wodurch der erste elektrische Verbindungsleiter die ersten elektrischen Zellleiter der beiden Zellen elektrisch verbindet. Der zweite elektrische Verbindungsleiter kontaktiert sowohl den zweiten elektrischen Zellleiter der ersten Zelle als auch den zweiten elektrischen Zellleiter der zweiten Zelle, vorzugsweise jeweils am Außenmantel. Demnach ist der Zellverbinder nicht nur zur elektrischen Verschaltung, sondern auch zur mechanischen Verbindung von zwei Zellen ausgebildet. Die elektrische Parallelschaltung der beiden Zellen ist dabei unabhängig von der Orientierung der beiden Zellen zueinander.

Die Ausbildung sowohl des Gehäuses einer Zelle als auch der Zellverbinder zur Aufnahme desselben Mediums, bewirkt einen effizienten Transport von Wärme zur Temperierung der Zelle.

In einer Ausgestaltung des Zellverbinders zur elektrischen Parallelschaltung ist vorgesehen, dass der erste elektrische Verbindungsleiter inklusive dem ersten Stecker und dem zweiten Stecker zur Durchströmung mit einem Medium zur Temperierung von Zellen ausgebildet ist. Das Medium ist vorzugsweise flüssig. Ein solches zeichnet sich dadurch aus, dass es eine hohe Wärmekapazität hat und im unmittelbaren Kontakt mit dem ersten elektrischen Verbindungsleiter ist, sodass der thermische Widerstand zwischen Medium und elektrischem Verbindungsleiter gering ist.

In einer weiteren Ausgestaltung des Zellverbinders zur elektrischen Parallelschaltung ist vorgesehen, dass der erste elektrische Verbindungsleiter ein Hohlzylinder mit einem Kragen ist und der erste Stecker und der zweite Stecker am Hohlzylinder ausgebildet sind. Weiter ist der zweite elektrische Verbindungsleiter ein Ring. Der Verbindungsisolator ist unmittelbar um den Hohlzylinder und unmittelbar auf dem Kragen angeordnet. Der zweite elektrische Verbindungsleiter ist unmittelbar um den Verbindungsisolator angeordnet. Diese Ausgestaltung zeichnet sich durch eine geringe Anzahl an Komponenten, nämlich im Wesentlichen dem Hohlzylinder mit Kragen, dem Ring und dem Verbindungsisolator aus. Weiter weisen diese Komponenten einfache geometrische Formen auf. Dadurch sind Herstellungsaufwand und Herstellungskosten gering.

In einer weiteren Ausgestaltung des Zellverbinders zur elektrischen Parallelschaltung ist vorgesehen, dass der erste elektrische Verbindungsleiter und/oder der zweite elektrische Verbindungsleiter und/oder der Verbindungsisolator einstückig und aus einem einzigen Stück hergestellt sind bzw. ist. Durch die Herstellung des ersten und/oder zweiten elektrischen Verbindungsleiters und/der Verbindungsisolators aus jeweils einem einzigen Stück werden ebenfalls Herstellungsaufwand und Herstellungskosten gering gehalten.

In einer weiteren Ausgestaltung des Zellverbinders zur elektrischen Parallelschaltung ist vorgesehen, dass der Verbindungsisolator Verbindungsmittel zur Verbindung mit dem ersten elektrischen Verbindungsleiter und/oder dem zweiten elektrischen Verbindungsleiter aufweist und dass der erste elektrische Verbindungsleiter und/oder der zweite elektrische Verbindungsleiter komplementär zum Verbindungsmittel ausgebildet sind. Die Ausbildung der Verbindungsmittel im Verbindungsisolator führt zu einer weiteren Vereinfachung der Herstellung und Reduktion der Herstellungskosten, da keine separaten Verbindungsmittel erforderlich sind. Die komplementäre Ausbildung bedeutet einen passgenauen Sitz der Komponenten.

In einer weiteren Ausgestaltung des Zellverbinders zur elektrischen Parallelschaltung ist vorgesehen, dass der Verbindungsisolator ein Spritzgussteil ist. Diese Ausgestaltung ist besonders bevorzugt. Denn dem Spritzgussteil innewohnend ist sowohl die Einstückigkeit als auch Ausbildung von Verbindungsmitteln und die komplementäre Ausbildung zum ersten und/oder zweiten elektrischen Verbindungsleiter.

Die Aufgabe ist zum anderen auch durch einen Zellverbinder zur elektrischen Serienschaltung mit den Merkmalen von Patentanspruch 7 gelöst. Der Zellverbinder weist einen elektrischen Verbindungsleiter, einen ersten Verbindungsisolator, einen zweiten Verbindungsisolator und ein Verbindungselement auf und ist zur Anordnung zwischen einer Kappe einer ersten Zelle und einer Kappe einer zweiten Zelle ausgebildet. Zum einen sind der elektrische Verbindungsleiter und der erste Verbindungsisolator und zum anderen sind das Verbindungselement und der erste Verbindungsisolator miteinander verbunden, sodass der elektrische Verbindungsleiter und das Verbindungselement voneinander elektrisch isoliert sind. Der elektrische Verbindungsleiter ist mit dem zweiten Verbindungsisolator verbunden. Der elektrische Verbindungsleiter weist einen ersten Stecker und das Verbindungselement einen zweiten Stecker auf, wobei der erste Stecker komplementär zu einer Buchse der ersten Zelle und der zweite Stecker komplementär zu einer Buchse der zweiten Zelle ausgebildet ist. Der elektrische Verbindungsleiter ist ausgebildet, die Buchse der ersten Zelle und den zweiten elektrischen Zellleiter der zweiten Zelle elektrisch miteinander zu verbinden. Der elektrische Verbindungsleiter inklusive dem ersten Stecker, der erste Verbindungsisolator und das Verbindungselement inklusive dem zweiten Stecker sind zur Aufnahme eines Mediums zur Temperierung von Zellen ausgebildet.

Eine erste und eine zweite Zelle werden durch den Zellverbinder elektrisch seriell miteinander verschaltet und geometrisch seriell zueinander angeordnet, indem der erste Stecker des Zellverbinders in eine der Buchsen der ersten Zelle und der zweite Stecker in eine Buchse der zweiten Zelle eingebracht werden. Der erste Stecker kontaktiert über die Buchse den ersten elektrischen Zellleiter der ersten Zelle elektrisch. Da der erste Stecker zum elektrischen Verbindungsleiter gehört und der elektrische Verbindungsleiter auch noch den zweiten elektrischen Zellleiter, vorzugsweise am Außenmantel, der zweiten Zelle elektrisch kontaktiert, verbindet der elektrische Verbindungsleiter den ersten elektrischen Zellleiter der ersten Zelle mit dem zweiten elektrischen Zellleiter der zweiten Zelle elektrisch. Demnach ist der Zellverbinder nicht nur zur elektrischen Verschaltung, sondern auch zur mechanischen Verbindung von zwei Zellen ausgebildet. Die elektrische Serienschaltung der beiden Zellen ist dabei unabhängig von der Orientierung der beiden Zellen zueinander.

In einer Ausgestaltung des Zellverbinders zur elektrischen Serienschaltung ist vorgesehen, dass der elektrische Verbindungsleiter inklusive dem ersten Stecker, der erste Verbindungsisolator und das Verbindungselement inklusive dem zweiten Stecker zur Durchströmung mit einem Medium zur Temperierung von Zellen ausgebildet sind. Das Medium ist vorzugsweise flüssig und vorzugsweise ein elektrischer Isolator. Ein solches zeichnet sich dadurch aus, dass es eine hohe Wärmekapazität hat und im unmittelbaren Kontakt mit dem ersten elektrischen Verbindungsleiter ist, sodass der thermische Widerstand zwischen Medium und elektrischem Verbindungsleiter gering ist.

In einer weiteren Ausgestaltung des Zellverbinders zur elektrischen Serienschaltung ist vorgesehen, dass sowohl der erste Verbindungsisolator als auch der zweite Verbindungsisolator jeweils ein Ring ist, dass der elektrische Verbindungsleiter ein Hohlzylinder mit einem topfförmigen Kragen ist, der Kragen eine erste Kragenseite und eine zweite Kragenseite aufweist, der erste Stecker am Hohlzylinder ausgebildet ist, die erste Kragenseite unmittelbar auf dem ersten Verbindungsisolator und die zweite Kragenseite unmittelbar auf dem zweiten Verbindungsisolator angeordnet ist und dass das Verbindungselement ein Hohlzylinder mit einem Kragen ist, der zweite Stecker am Hohlzylinder ausgebildet ist und der Kragen unmittelbar auf dem ersten Verbindungsisolator angeordnet ist. Diese Ausgestaltung zeichnet sich durch eine geringe Anzahl an Komponenten aus, nämlich im Wesentlichen den beiden Ringen und den beiden Hohlzylindern mit Kragen. Weiter weisen diese Komponenten einfache geometrische Formen auf. Dadurch sind Herstellungsaufwand und Herstellungskosten gering.

In einer weiteren Ausgestaltung des Zellverbinders zur elektrischen Serienschaltung ist vorgesehen, dass der elektrische Verbindungsleiter und/oder das Verbindungselement und/oder der erste Verbindungsisolator und/oder der zweite Verbindungsisolator einstückig und aus einem einzigen Stück hergestellt sind bzw. ist. Durch die Herstellung des elektrischen Verbindungsleiters und/oder des Verbindungselements und/oder des ersten Verbindungsisolators und/oder des zweiten Verbindungsisolators aus jeweils einem einzigen Stück werden ebenfalls Herstellungsaufwand und Herstellungskosten gering gehalten.

In einer weiteren Ausgestaltung des Zellverbinders zur elektrischen Serienschaltung ist vorgesehen, dass der erste Verbindungsisolator Verbindungsmittel zur Verbindung mit dem Verbindungselement und/oder dem elektrischen Verbindungsleiter aufweist und/oder dass der zweite Verbindungsisolator Verbindungsmittel zur Verbindung mit dem elektrischen Verbindungsleiter aufweist und dass das Verbindungselement und/oder der elektrische Verbindungsleiter komplementär zum Verbindungsmittel ausgebildet sind. Die Ausbildung der Verbindungsmittel im ersten und/oder zweiten Verbindungsisolator führt zu einer weiteren Vereinfachung der Herstellung und Reduktion der Herstellungskosten, da keine separaten Verbindungsmittel erforderlich sind. Die komplementäre Ausbildung bedeutet einen passgenauen Sitz der Komponenten.

In einer weiteren Ausgestaltung des Zellverbinders zur elektrischen Serienschaltung ist vorgesehen, dass der erste Verbindungsisolator und/oder der zweite Verbindungsisolator ein Spritzgussteil sind/ist. Diese Ausgestaltung ist besonders bevorzugt. Denn den Spritzgussteilen innewohnend ist sowohl Einstückigkeit als auch Ausbildung von Verbindungsmitteln und die komplementäre Ausbildung zu den verbundenen Komponenten.

Der Zellverbinder zur elektrischen Parallelschaltung und der Zellverbinder zur elektrischen Serienschaltung weisen auch gemeinsame Ausgestaltungen auf. Bei solchen gemeinsamen Ausgestaltungen wird von Zellverbindern gesprochen, wobei sowohl der Zellverbinder zur elektrischen Parallelschaltung als auch der Zellverbinder zur elektrischen Serienschaltung gemeint ist.

In einer Ausgestaltung des Zellverbinders ist vorgesehen, dass der Zellverbinder zur Abdichtung zwischen der Kappe einer ersten Zelle und der Kappe einer zweiten Zelle ausgebildet ist. Die Ausbildung zur Abdichtung bewirkt, dass, wenn eine erste Zelle und eine zweite Zelle durch den Zellverbinder mechanisch miteinander verbunden sind, ein flüssiges und/oder gasförmiges Medium verlustfrei von der ersten zur zweiten Zelle strömbar ist.

In einer Weiterbildung der vorstehenden Ausgestaltung bei dem Zellverbinder zur elektrischen Parallelschaltung ist vorgesehen, dass der Verbindungsisolator Dichtmittel zur Abdichtung aufweist. Wenn eine erste und eine zweite Zelle durch den Zellverbinder mechanisch miteinander verbunden sind, dann findet die Abdichtung durch die Dichtmittel zwischen dem Verbindungsisolator und den Kappen der Zellen statt. Die Dichtmittel sind demnach separate Komponenten und auf gegenüberliegenden Seiten des Verbindungsisolators angeordnet. Bei den Dichtmitteln handelt es sich zum Beispiel um Dichtungen aus einem elastischen Material und in den Seiten des Verbindungsisolators sind zum Beispiel Nuten zur Aufnahme der Dichtungen vorgesehen.

In einer Weiterbildung der vorstehenden Ausgestaltung bei dem Zellverbinder zur elektrischen Serienschaltung ist vorgesehen, dass der erste Verbindungsisolator und der zweite Verbindungsisolator Dichtmittel zur Abdichtung aufweisen. Wenn eine erste und eine zweite Zelle durch den Zellverbinder mechanisch miteinander verbunden sind, dann findet die Abdichtung einerseits durch eines der Dichtmittel zwischen dem ersten Verbindungsisolator und einer der Kappen der ersten Zelle und andererseits durch eines der Dichtmittel zwischen dem zweiten Verbindungsisolator und einer der Kappen der zweiten Zelle statt. Die Dichtmittel sind demnach separate Komponenten und auf der einer Kappe zugewandten Seite des jeweiligen Verbindungsisolators angeordnet. Bei den Dichtmitteln handelt es sich zum Beispiel um Dichtungen aus einem elastischen Material und in den jeweiligen Seiten der Verbindungsisolatoren sind zum Beispiel Nuten zur Aufnahme der Dichtungen vorgesehen.

In einer weiteren Ausgestaltung des Zellverbinders ist vorgesehen, dass im Zellverbinder radial verlaufende Ausnehmungen sind, sodass, wenn ein Medium zur Temperierung von Zellen durch den Zellverbinder geströmt wird, ein Teil des Mediums durch die radial verlaufenden Ausnehmungen strömt. Wenn eine erste und eine zweite Zelle durch den Zellverbinder mechanisch miteinander verbunden sind, dann weist der Zellverbinder elektrische Kontakte zu den Zellen auf. Da elektrische Kontakte für gewöhnlich einen höheren elektrischen Widerstand aufweisen als die elektrischen Leiter, die sie verbinden, bewirkt ein durch die elektrischen Kontakte fließender Strom mehr Wärme in den elektrischen Kontakten als in den elektrischen Leitern. Durch die radial verlaufenden Ausnehmungen transportiert das Medium die in den elektrischen Kontakten entstehende Wärme ab.

Bei einem Zellverbinder zur elektrischen Parallelschaltung, bei dem der erste elektrische Verbindungsleiter ein Hohlzylinder mit einem Kragen ist, der erste Stecker und der zweite Stecker am Hohlzylinder ausgebildet sind und der Verbindungsisolator unmittelbar um den Hohlzylinder und unmittelbar auf dem Kragen angeordnet ist und bei dem der zweite elektrische Verbindungsleiter ein Ring ist und unmittelbar um den Verbindungsisolator angeordnet ist, ist in einer Weiterbildung der vorstehenden Ausgestaltung vorgesehen, dass die Ausnehmungen im Hohlzylinder und im Ring und im Kragen und/oder im Verbindungsisolator ausgebildet sind.

Bei einem Zellverbinder zur elektrischen Serienschaltung, bei dem sowohl der erste Verbindungsisolator als auch der zweite Verbindungsisolator ein Ring sind, der elektrische Verbindungsleiter ein Hohlzylinder mit einem topfförmigen Kragen ist, der Kragen eine erste Kragenseite und eine zweite Kragenseite aufweist, der erste Stecker am Hohlzylinder ausgebildet ist, die erste Kragenseite unmittelbar auf dem ersten Verbindungsisolator und die zweite Kragenseite unmittelbar auf dem zweiten Verbindungsisolator angeordnet ist und das Verbindungselement ein Hohlzylinder mit einem Kragen ist, der zweite Stecker am Hohlzylinder ausgebildet ist und der Kragen unmittelbar auf dem ersten Verbindungsisolator angeordnet ist, ist einer Weiterbildung der vorstehenden Ausgestaltung vorgesehen, dass die Ausnehmungen im Hohlzylinder des elektrischen Verbindungsleiters und im Kragen und/oder im zweiten Verbindungsisolator ausgebildet sind.

In einer zur vorstehenden Weiterbildung alternativen oder zusätzlichen Weiterbildung ist vorgesehen, dass die Ausnehmungen im ersten Verbindungsisolator und/oder im Kragen des elektrischen Verbindungsleiter ausgebildet sind.

Die Aufgabe ist auch durch ein Zellmodul mit den Merkmalen von Patentanspruch 20 gelöst. Das Zellmodul weist mindestens zwei Zellen und mindestens einen der zuvor beschriebenen Zellverbinder auf. Die mindestens zwei Zellen sind durch den mindestens einen Zellverbinder miteinander verbunden.

In einer Ausgestaltung des Zellmoduls ist vorgesehen, dass das Zellmodul ein Modulgehäuse mit einem Modulinnenraum, einer Modullängsachse und einer Innenquerschnittskontor des Modulinnenraums aufweist, dass die Innenquerschnittskontor derart an die Außenmäntel der mindestens zwei Zellen angepasst ist, sodass die mindestens zwei Zellen und der mindestens eine Zellverbinder in den Modulinnenraum einschiebbar sind, die mindestens zwei Zellen radial zur Modullängsachse im Modulinnenraum positioniert sind und zwischen einerseits den Außenmänteln der mindestens zwei Zellen und dem mindestens einen Zellverbinder und andererseits dem Modulinnenraum ein Medium zur Temperierung von Zellen aufnehmbar ist. Das Zellmodul ordnet die Zellen somit geometrisch seriell an. Zwei aufeinanderfolgende Zellen in dem Zellenmodul werden durch einen Zellverbinder zur elektrischen Parallelschaltung zwischen diesen Zellen elektrisch parallel geschaltet oder durch einen Zellverbinder zur elektrischen Serienschaltung zwischen diesen Zellen elektrisch in seriell geschaltet. Bei dieser Ausgestaltung werden die elektrischen Energiespeicher in den Zellen zumindest vom Innenmantel und vom Außenmantel her temperiert. Zusätzlich bieten sich auch noch die zuvor beschriebenen radialen Ausnehmungen in dem Zellverbinder an, um die Temperierung des elektrischen Energiespeichers und auch der elektrischen Kontakte weiter zu verbessern.

In einer Weiterbildung der vorstehenden Ausgestaltung des Zellmoduls ist vorgesehen, dass zwischen einerseits den Außenmänteln der mindestens zwei Zellen und dem mindestens einen Zellverbinder und andererseits dem Modulinnenraum ein Medium zur Temperierung von Zellen durchströmbar ist. Das Medium ist vorzugsweise flüssig. Ein solches zeichnet sich dadurch aus, dass es eine hohe Wärmekapazität hat und im unmittelbaren Kontakt mit dem zweiten elektrischen Verbindungsleiter ist, sodass der thermische Widerstand zwischen Medium und dem zweiten elektrischen Verbindungsleiter gering ist.

In einer weiteren Ausgestaltung des Zellmoduls ist vorgesehen, dass das Modulgehäuse elektrisch leitend ist, dass die mindestens zwei Zellen durch den mindestens einen Zellverbinder elektrisch parallel geschaltet sind und dass die Außenmäntel der mindestens zwei Zellen durch den Modulinnenraum elektrisch miteinander verbunden sind. Die zusätzliche elektrische Verbindung der Außenmäntel der Zellen durch das Modulgehäuse bewirkt eine Reduktion des elektrischen Widerstands für einen durch die Zellen fließenden elektrischen Strom.

In einer weiteren Ausgestaltung des Zellmoduls, die zu der zuvor beschriebenen Ausgestaltung eine Alternative ist, ist vorgesehen, dass das Modulgehäuse im Modulinnenraum elektrisch isolierend ist und dass die mindestens zwei Zellen durch den mindestens einen Zellverbinder elektrisch in Serie geschaltet sind.

In einer weiteren Ausgestaltung des Zellmoduls ist vorgesehen, dass die Innenquerschnittskontor Rippen aufweist. Demnach handelt es sich bei diesen Rippen in Bezug auf die Modullängsachse um Längsrippen. Die oberen Enden der Rippen positionieren die Zellen radial zur Modullängsachse im Modulinnenraum. Weiter geben die Rippen eine Querschnittfläche frei, welche die Aufnahme eines Mediums zur Temperierung der Zellen ermöglicht. Insbesondere bietet sich ein flüssiges Medium an. Durch die Rippen wird auch die Oberfläche des Modulgehäuses vergrößert, sodass Wärme besser vom Medium auf das Modulgehäuse übertragen wird.

In einer weiteren Ausgestaltung des Zellmoduls ist vorgesehen, dass im Modulgehäuse Zugänge zur Messung von Spannungen und/oder Temperaturen von Zellen ausgebildet sind. Da Eigenschaften der elektrischen Energiespeicher in Zellen aufgrund von Fertigungstoleranzen nicht identisch sind, bietet sich die Überwachung der Spannungen und/oder der Temperaturen der einzelnen Zellen im Modulgehäuse an. Die Spannung und die Temperatur stellen den Zustand einer Zelle dar. Die Zugänge sind dabei dicht ausgebildet, sodass ein Medium zu Temperierung aus dem Modulgehäuse nicht ausdringen kann.

Die Aufgabe ist auch durch ein Batteriemodul mit den Merkmalen von Patentanspruch 27 gelöst. Das Batteriemodul weist mindestens zwei der zuvor beschriebenen Zellmodule auf.

Im Kontext der Erfindung bedeutet eine elektrische Verbindung stets eine elektrisch leitende Verbindung und eine elektrische Kontaktierung eine elektrisch leitende Kontaktierung.

Im Einzelnen ist eine Vielzahl von Möglichkeiten gegeben, die Zellverbinder, dass Zellmodul und das Batteriemodul auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigt abstrahiert
- Fig. 1a, 1b: ein erstes Ausführungsbeispiel einer Zelle,
- Fig. 2: ein zweites Ausführungsbeispiel einer Zelle,
- Fig. 3: eine elektrische Serienschaltung von zwei Zellen gemäß dem ersten Ausführungsbeispiel durch ein Ausführungsbeispiel eines Zellverbinders zur elektrischen Serienschaltung,
- Fig. 4a-4c: das Ausführungsbeispiel eines Zellverbinders zur elektrischen Serienschaltung,
- Fig. 5: eine elektrische Parallelschaltung von zwei Zellen gemäß dem ersten Ausführungsbeispiel durch ein erstes Ausführungsbeispiel eines Zellverbinders zur elektrischen Parallelschaltung,
- Fig. 6a-6c: das Ausführungsbeispiel eines Zellverbinders zur elektrischen Parallelschaltung,
- Fig. 7a-7c: ein weiteres Ausführungsbeispiel eines Zellverbinders zur elektrischen Parallelschaltung,
- Fig. 8a-8b: ein Ausführungsbeispiel eines Zellmoduls und
- Fig. 9a-9b: ein Ausführungsbeispiel eines Batteriemoduls.

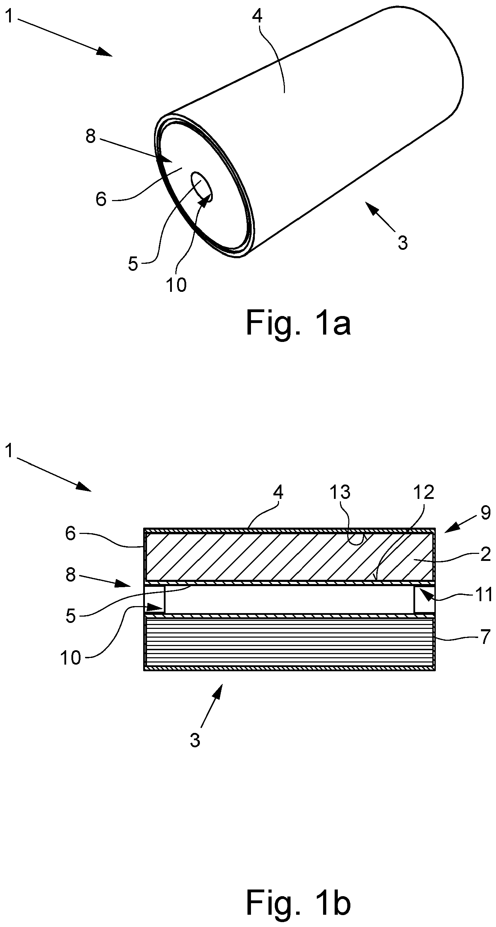

Fig. 1a zeigt ein erstes Ausführungsbeispiel einer Zelle 1 in perspektivischer Ansicht und Fig. 1b einen Längsschnitt des Ausführungsbeispiels. Die Zelle weist einen elektrischen Energiespeicher 2 und ein senkrechtes hohlzylinderförmiges Gehäuse 3 auf.

Das Gehäuse 3 weist einen Außenmantel 4, einen Innenmantel 5, eine erste Kappe 6 und eine zweite Kappe 7 auf. Sowohl der Außenmantel 4 als auch der Innenmantel 5 weisen jeweils eine kreisförmige Querschnittskontur auf. Ein erster elektrischer Zellleiter 8 ist durch den Innenmantel 5 und die erste Kappe 6 und ein zweiter elektrischer Zellleiter 9 ist durch den Außenmantel 4 und die zweite Kappe 7 gebildet. Sowohl der erste elektrische Zellleiter 8 als auch der zweite elektrische Zellleiter 9 sind jeweils einstückig aus einem einzigen Stück hergestellt und elektrisch leitend. Der erste elektrische Zellleiter 8 und der zweite elektrische Zellleiter 9 sind elektrisch voneinander isoliert.

Durch die Einstückigkeit des ersten Zellleiters 8 und des zweiten Zellleiters 9 ist die Herstellung der Zelle 1 vereinfacht, wodurch auch die Herstellungskosten sinken. Hinzu kommt, dass durch die Zuordnung einerseits der ersten Kappe 6 zum Innenmantel 5 und andererseits der zweiten Kappe 7 zum Außenmantel das Zusammenfügen des ersten Zellleiters 8 und des zweiten Zellleiters 9 sich auf ein Einschieben des ersten Zellleiters 8 in den zweiten Zellleiter 9 vereinfacht. Eine weitere Vereinfachung ist dadurch gegeben, dass der elektrische Energiespeicher 2 auf den Innenmantel 5 gewickelt ist. Vorzugsweise wird der Innenmantel 5 als Wickeldorn zum Aufwickeln des elektrischen Energiespeichers 2 verwendet. Einzelne Energiespeicherlagen des Energiespeichers 2 sind beispielhaft in der unteren Hälfte von Fig. 1b dargestellt.

Der Innenmantel 5 weist einerseits an, also in Höhe, der ersten Kappe 6 eine erste Buchse 10 und andererseits an, also in Höhe, der zweiten Kappe 7 eine zweite Buchse 11 für Stecker eines Zellverbinders auf. Die erste Buchse 10 und die zweite Buchse 11 sind gleich und zum Stecken der Stecker eines Zellverbinders ausgebildet.

Der elektrische Energiespeicher 2 ist ein Lithium-Ionen-Energiespeicher und weist einen ersten Energiespeicherpol 12 und einen zweiten Energiespeicherpol 13 auf. Der elektrische Energiespeicher 2 ist im Gehäuse 3 angeordnet.

Zum einen sind der erste Energiespeicherpol 12 und der erste elektrische Zellleiter 8 und zum anderen sind der zweite Energiespeicherpol 13 und der zweite elektrische Zellleiter 9 elektrisch miteinander verbunden. Demnach sind zum einen einerseits jeweils der Innenmantel 5 und die erste Kappe 6 und andererseits der erste Energiespeicherpol 12 elektrisch verbunden und sind zum anderen einerseits jeweils der Außenmantel 4 und die zweite Kappe 7 und andererseits der zweite Energiespeicherpol 13 elektrisch verbunden. Die elektrische Verbindung zwischen dem ersten Energiespeicherpol 12 und der ersten Kappe 6 ist derart, dass der erste Energiespeicherpol 12 an vorzugsweise jeder Energiespeicherlage des elektrischen Energiespeichers 2 und die erste Kappe 6 miteinander elektrisch verbunden sind. Eine elektrische Verbindung mit der Zelle 1 kann somit über den ersten Zellleiter 8, also die erste Kappe 6 und den Innenmantel 5, und über den zweiten Zellleiter 9, also den Außenmantel 4 und die zweite Kappe 7 hergestellt werden. Dabei ist zu berücksichtigen, dass die erste Buchse 10 und die zweite Buchse 11 zum Innenmantel 5 gehören.

Die Temperatur des elektrischen Energiespeichers 2 in der Zelle 1 muss in einem vorgegebenen Temperaturbereich liegen, damit die maximal mögliche Leistungsfähigkeit des elektrischen Energiespeichers 2 gegeben ist und seine maximal mögliche Lebensdauer erreicht wird. Die Umgebungstemperatur der Zelle 1 und die beim Laden und Entladen des elektrischen Energiespeichers 2 im elektrischen Energiespeicher 2 entstehende Wärme können ein Verlassen des vorgegebenen Temperaturbereichs bewirken. Folglich ist es notwendig, die Zelle 1 zu temperieren, sodass die Temperatur des elektrischen Energiespeichers 2 in dem vorgegebenen Temperaturbereich liegt. Deshalb ist das Gehäuse 3 derart ausgebildet, dass ein flüssiges Medium zur Temperierung der Zelle 1 durch den Innenmantel 7 strömbar ist. Ein flüssiges Medium zeichnet sich dadurch aus, dass es zum einen eine hohe Wärmekapazität hat und zum anderen im unmittelbaren Kontakt mit dem Innenmantel 5 ist, sodass der thermische Widerstand zwischen Medium und Innenmangel 5 gering ist.

Weiter umschließt das Gehäuse 3 den elektrischen Energiespeicher 2 dicht. Dabei bedeutet dicht umschlossen zum einen, dass der elektrische Energiespeicher 2 gegen Umwelteinflüsse geschützt ist, sodass er in seiner Funktionalität nicht beeinträchtigt ist, und zum anderen, dass vom elektrischen Energiespeicher 2 keine Gefahren für die Umwelt ausgehen. Das dichte Umschließen bezieht sich auch auf das Medium, sodass das Medium nicht in das Gehäuse 3 gelangt.

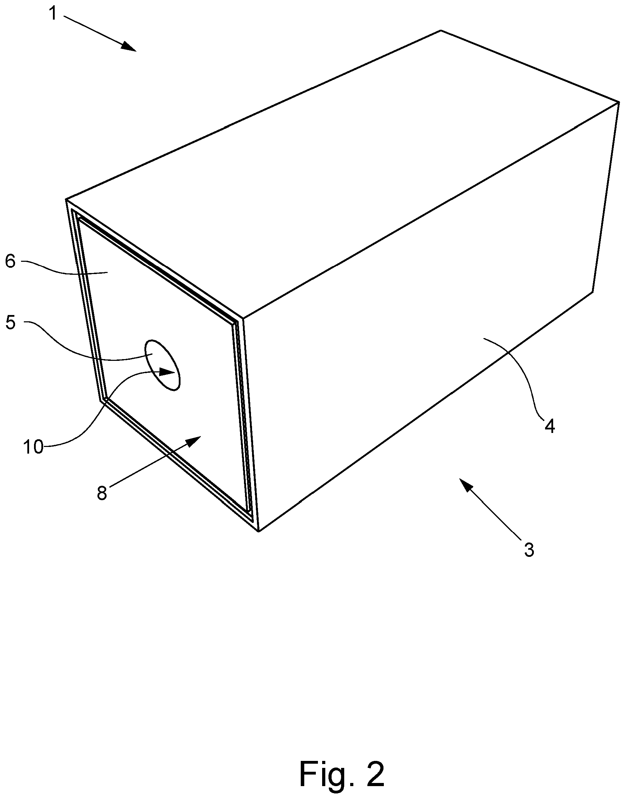

Fig. 2 zeigt ein zweites Ausführungsbeispiel einer Zelle 1 in perspektivischer Ansicht. Das zweite Ausführungsbeispiel unterscheidet sich vom ersten Ausführungsbeispiel ausschließlich dadurch, dass der Außenmantel 4 keine kreisförmige, sondern eine rechteckige Querschnittskontur aufweist. Im Übrigen gelten die Ausführungen zum ersten Ausführungsbeispiel für das zweite Ausführungsbeispiel entsprechend.

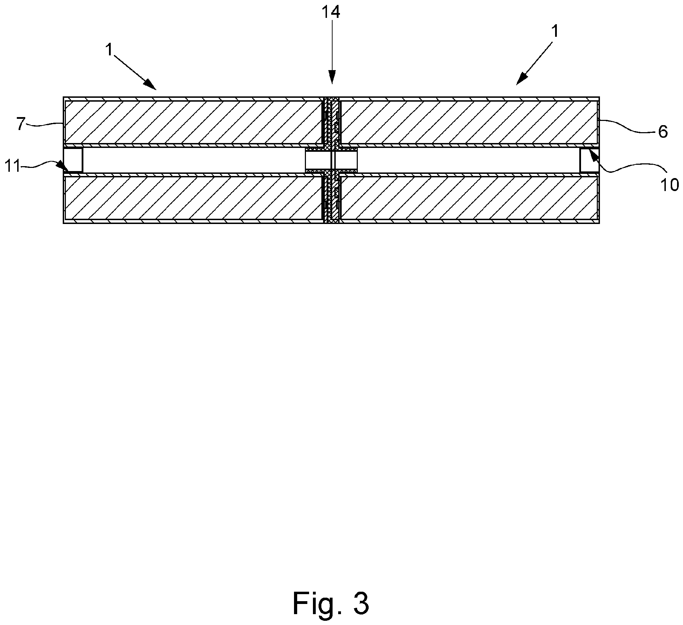

Fig. 3 zeigt einen Längsschnitt einer elektrische Serienschaltung von zwei Zellen 1 gemäß dem ersten Ausführungsbeispiel durch ein Ausführungsbeispiel eines Zellverbinders 14 zur elektrischen Serienschaltung. Die beiden Zellen 1 sind geometrisch seriell angeordnet und der Zellverbinder 14 ist zwischen der linke Zelle 1 und der rechten Zelle 1 angeordnet.

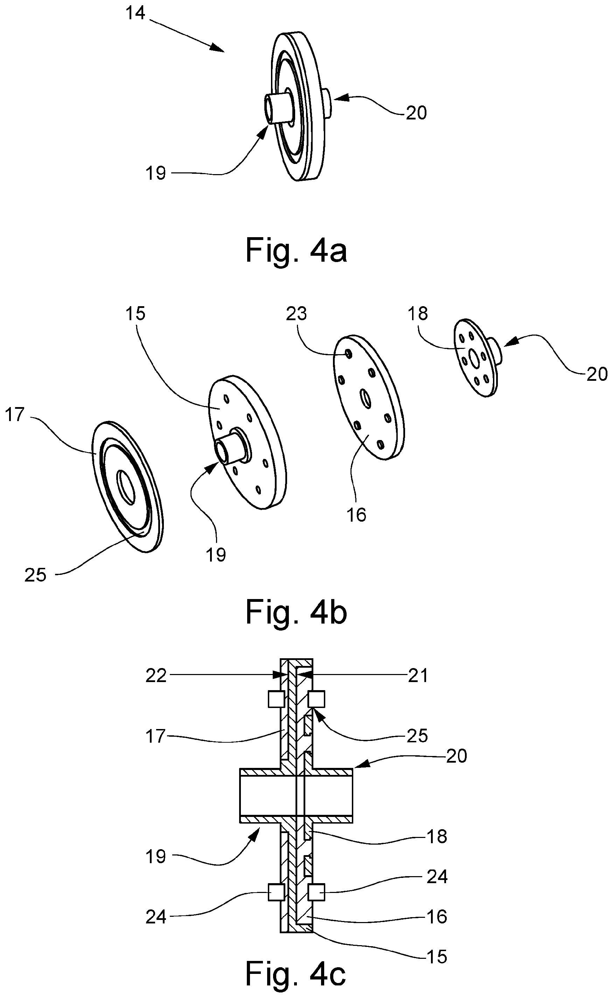

Fig. 4a zeigt den Zellverbinder 14 zur elektrischen Serienschaltung aus Fig. 3 separat in perspektivischer Ansicht. Fig. 4b zeigt die Komponenten des Zellverbinders 14 entlang seiner Längsachse auseinandergezogen. Fig. 4c zeigt einen Längsschnitt des Zellverbinders 14.

Der Zellverbinder 14 weist einen elektrischen Verbindungsleiter 15, einen ersten Verbindungsisolator 16, einen zweiten Verbindungsisolator 17 und ein Verbindungselement 18 auf und ist zur Anordnung zwischen der ersten Kappe 6 der linken Zelle 1 und der zweiten Kappe 7 der rechten Zelle 1 ausgebildet.

Der elektrische Verbindungsleiter 15, das Verbindungselement 18, der erste Verbindungsisolator 16 und der zweite Verbindungsisolator 17 sind jeweils einstückig und aus einem einzigen Werkstück hergestellt. Zum einen sind der elektrische Verbindungsleiter 15 und der erste Verbindungsisolator 16 und zum anderen sind das Verbindungselement 18 und der erste Verbindungsisolator 16 miteinander verbunden, sodass der elektrische Verbindungsleiter 15 und das Verbindungselement 18 voneinander elektrisch isoliert sind. Der elektrische Verbindungsleiter 15 ist mit dem zweiten Verbindungsisolator 17 verbunden.

Der elektrische Verbindungsleiter 15 weist einen ersten Stecker 19 und das Verbindungselement 18 einen zweiten Stecker 20 auf. Dabei ist der erste Stecker 19 komplementär zur ersten Buchse 10 der linken Zelle 1 und der zweite Stecker 20 komplementär zur zweiten Buchse 11 der rechten Zelle 1 ausgebildet. Der elektrische Verbindungsleiter 15 ist ausgebildet, die erste Buchse 10 der linken Zelle 1 und den zweiten elektrischen Zellleiter 9 am Außenmantel 4 der rechten Zelle 1 elektrisch miteinander zu verbinden. Der elektrische Verbindungsleiter 15 inklusive dem ersten Stecker 19, der erste Verbindungsisolator 16 und das Verbindungselement 18 inklusive dem zweiten Stecker 20 sind zur Aufnahme eines Mediums zur Temperierung der Zellen 1 ausgebildet.

Der elektrische Verbindungsleiter 15 inklusive dem ersten Stecker 19, der erste Verbindungsisolator 16 und das Verbindungselement 18 inklusive dem zweiten Stecker 20 sind zur Durchströmung mit einem Medium zur Temperierung der Zellen 1 ausgebildet.

Somit sind die linke Zelle 1 und die rechte Zelle 1 durch den Zellverbinder 14 sowohl elektrisch seriell miteinander verschaltet als auch geometrisch seriell zueinander angeordnet, indem der erste Stecker 19 des Zellverbinders 14 in die erste Buchse 10 der linken Zelle 1 und der zweite Stecker 20 in die zweite Buchse 11 der rechten Zelle 1 eingebracht ist. Der erste Stecker 19 kontaktiert über die erste Buchse 10 den ersten elektrischen Zellleiter 8 der linken Zelle 1 elektrisch. Da der erste Stecker 10 zum elektrischen Verbindungsleiter 15 gehört und der elektrische Verbindungsleiter 15 auch noch den zweiten elektrischen Zellleiter 9, vorzugsweise am Außenmantel 4, der rechten Zelle 1 elektrisch kontaktiert, verbindet der elektrische Verbindungsleiter 15 den ersten elektrischen Zellleiter 8 der linken Zelle 1 mit dem zweiten elektrischen Zellleiter 9 der rechten Zelle 1 elektrisch. Demnach ist der Zellverbinder 14 nicht nur zur elektrischen Verschaltung, sondern auch zur mechanischen Verbindung von zwei Zellen 1 ausgebildet. Die elektrische Serienschaltung der beiden Zellen 1 ist dabei unabhängig von der Orientierung der beiden Zellen 1 zueinander.

Sowohl der erste Verbindungsisolator 16 als auch der zweite Verbindungsisolator 17 sind ein Ring. Der elektrische Verbindungsleiter 15 ist ein Hohlzylinder mit einem topfförmigen Kragen. Der Kragen weist eine erste Kragenseite 21 und eine zweite Kragenseite 22 auf. Der erste Stecker 19 ist am Hohlzylinder ausgebildet. Die erste Kragenseite 21 ist unmittelbar auf dem ersten Verbindungsisolator 16 und die zweite Kragenseite 22 ist unmittelbar auf dem zweiten Verbindungsisolator 17 angeordnet. Das Verbindungselement 18 ist ein Hohlzylinder mit einem Kragen, wobei der Kragen jedoch nicht topfförmig ist. Der zweite Stecker 20 ist am Hohlzylinder ausgebildet. Der Kragen des Verbindungselements 18 ist unmittelbar auf dem ersten Verbindungsisolator 16 angeordnet.

Der erste Verbindungsisolator 16 weist Verbindungsmittel 23 zur Verbindung mit dem Verbindungselement 18 und dem elektrischen Verbindungsleiter 15 auf. Auch der zweite Verbindungsisolator 17 weist Verbindungsmittel 23 zur Verbindung mit dem elektrischen Verbindungsleiter 15 auf. Das Verbindungselement 18 und der elektrische Verbindungsleiter 15 sind komplementär zu den Verbindungsmitteln 23 ausgebildet. Der erste Verbindungsisolator 16 und der zweite Verbindungsisolator 17 sind jeweils ein Spritzgussteil. Die Verbindungsmittel 23 sind Vorsprünge, welche mit den zu den Vorsprüngen komplementären Ausnehmungen korrespondieren und die Verbindung herstellen, sodass diese Komponenten zueinander fixiert sind. Die Verbindung entsteht beim Spritzvorgang der Spritzgussteile, da der elektrische Verbindungsleiter 15 und das Verbindungselement 18 Teil der Spritzgussform der Spritzgussteile sind.

Der Zellverbinder 14 ist zur Abdichtung zwischen der ersten Kappe 6 der linken Zelle 1 und der zweiten Kappe 7 der rechten Zelle 1 ausgebildet. Dazu weisen der erste Verbindungsisolator 16 ein Dichtmittel 24 und auch der zweite Verbindungsisolator 17 ein Dichtmittel 24 auf. Bei den Dichtmitteln 24 handelt es sich um Dichtungen aus einem elastischen Material. Zur Aufnahme der Dichtmittel 24 weisen sowohl der erste Verbindungsisolator 16 als auch der zweite Verbindungsisolator 17 jeweils eine Nut 25 auf. Zum Beispiel wird Zweikomponenten-Spritzgusstechnik verwendet, bei welcher die Weichkomponente, also das Dichtmittel 24, direkt in die Hartkomponente, also die Nut 25 gespritzt wird.

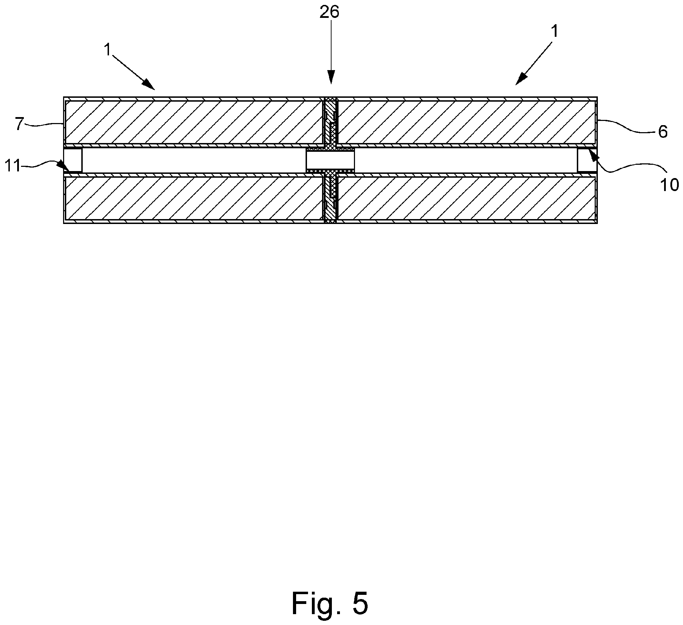

Fig. 5 zeigt einen Längsschnitt einer elektrischen Parallelschaltung von zwei Zellen 1 gemäß dem ersten Ausführungsbeispiel durch ein erstes Ausführungsbeispiel eines Zellverbinders 26 zur elektrischen Parallelschaltung. Die beiden Zellen 1 sind geometrisch seriell angeordnet und der Zellverbinder 26 ist zwischen der linken Zelle 1 und der rechten Zelle 1 angeordnet.

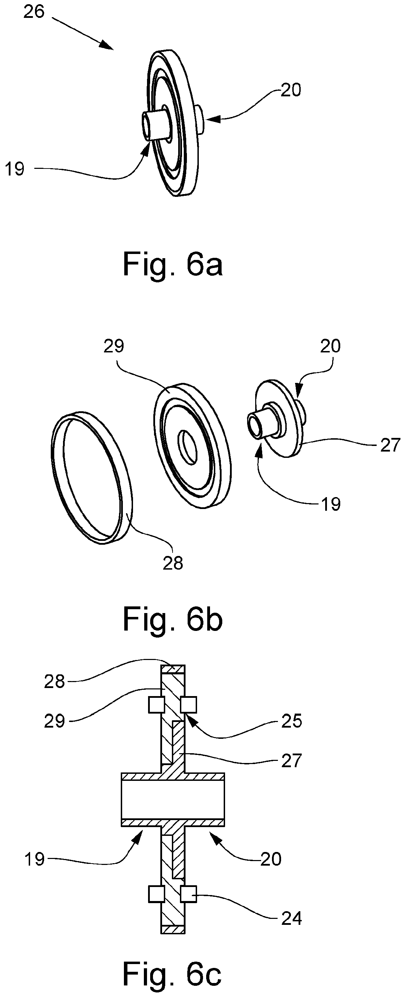

Fig. 6a zeigt den Zellverbinder 26 zur elektrischen Parallelschaltung aus Fig. 5 separat in perspektivischer Ansicht. Fig. 6b zeigt die Komponenten des Zellverbinders 26 entlang seiner Längsachse auseinandergezogen. Fig. 6c zeigt einen Längsschnitt des Zellverbinders 26.

Der Zellverbinder 26 weist einen ersten elektrischen Verbindungsleiter 27, einen zweiten elektrischen Verbindungsleiter 28 und einen Verbindungsisolator 29 auf und ist zur Anordnung zwischen der ersten Kappe 6 der linken Zelle 1 und der zweiten Kappe 7 der rechten Zelle 1 ausgebildet.

Der erste elektrische Verbindungsleiter 27, der zweite elektrische Verbindungsleiter 28 und der Verbindungsisolator 29 sind jeweils einstückig und aus einem einzigen Stück hergestellt. Zum einen sind der erste elektrische Verbindungsleiter 27 und der Verbindungsisolator 29 und zum anderen sind der zweite elektrische Verbindungsleiter 28 und der Verbindungsisolator 29 miteinander verbunden, sodass der erste elektrische Verbindungsleiter 27 und der zweite elektrische Verbindungsleiter 28 voneinander elektrisch isoliert sind. Der Verbindungsisolator 29 ist ein Spritzgussteil, wobei der erste elektrische Verbindungsleiter 27 und der zweite elektrische Verbindungsleiter 28 Teile der Spritzgussform des Verbindungsisolators 29 sind.

Der erste elektrische Verbindungsleiter 27 weist einen ersten Stecker 19 und einen zweiten Stecker 20 auf. Dabei ist der erste Stecker 19 komplementär zur ersten Buchse 10 der linken Zelle 1 und der zweite Stecker 20 komplementär zur zweiten Buchse 11 der rechten Zelle 1 ausgebildet. Der erste elektrische Verbindungsleiter 27 ist ausgebildet, die erste Buchse 10 der linken Zelle 1 und die zweite Buchse 11 der rechten Zelle 1 elektrisch miteinander zu verbinden. Der zweite elektrische Verbindungsleiter 28 ist ausgebildet, den zweiten elektrischen Zellleiter 9 am Außenmantel 4 der linken Zelle 1 und den zweiten elektrischen Zellleiter 9 am Außenmantel 4 der rechten Zelle 1 elektrisch miteinander zu verbinden. Der erste elektrische Verbindungsleiter 27 inklusive dem ersten Stecker 19 und dem zweiten Stecker 20 ist zur Aufnahme eines Mediums zur Temperierung von Zellen 1 ausgebildet.

Der erste elektrische Verbindungsleiter 27 inklusive dem ersten Stecker 19 und dem zweiten Stecker 20 sind zur Durchströmung mit einem Medium zur Temperierung der Zellen 1 ausgebildet.

Somit sind die linke Zelle 1 und die rechte Zelle 1 durch den Zellverbinder 26 sowohl elektrisch parallel miteinander verschaltet als auch geometrisch seriell zueinander angeordnet, indem der erste Stecker 19 des Zellverbinders 26 in die erste Buchse 10 der linken Zelle 1 und der zweite Stecker 20 in die zweite Buchse 11 der rechten Zelle 1 eingebracht ist.

Der erste Stecker 19 kontaktiert über die erste Buchse 10 den ersten elektrischen Zellleiter 8 der linken Zelle 1 und der zweite Stecker 20 kontaktiert über die zweite Buchse 11 den ersten elektrischen Zellleiter 8 der rechten Zelle 1 elektrisch, wodurch der erste elektrische Verbindungsleiter 27 die ersten elektrischen Zellleiter 8 der beiden Zellen 1 elektrisch verbindet. Der zweite elektrische Verbindungsleiter 28 kontaktiert sowohl den zweiten elektrischen Zellleiter 9 der linken Zelle 1 als auch den zweiten elektrischen Zellleiter 9 der rechten Zelle 1, vorzugsweise jeweils am Außenmantel 4. Demnach ist der Zellverbinder 26 nicht nur zur elektrischen Verschaltung, sondern auch zur mechanischen Verbindung von zwei Zellen 1 ausgebildet. Die elektrische Parallelschaltung der beiden Zellen 1 ist dabei unabhängig von der Orientierung der beiden Zellen 1 zueinander.

Der erste elektrische Verbindungsleiter 27 ist ein Hohlzylinder mit einem Kragen. Der erste Stecker 19 und auch der zweite Stecker 20 sind am Hohlzylinder ausgebildet. Weiter ist der zweite elektrische Verbindungsleiter 28 ein Ring. Der Verbindungsisolator 29 ist unmittelbar um den Hohlzylinder und unmittelbar auf dem Kragen angeordnet. Der zweite elektrische Verbindungsleiter 28 ist unmittelbar um den Verbindungsisolator 29 angeordnet.

Der Zellverbinder 26 ist zur Abdichtung zwischen der ersten Kappe 6 der linken Zelle 1 und er zweiten Kappe 7 der rechten Zelle 1 ausgebildet. Dazu weist der Verbindungsisolator 29 Dichtmittel 24 auf. Bei den Dichtmitteln 24 handelt es sich um Dichtungen aus einem elastischen Material. Zur Aufnahme der Dichtmittel 24 weist der Verbindungsisolator 29 zwei Nuten 25 auf.

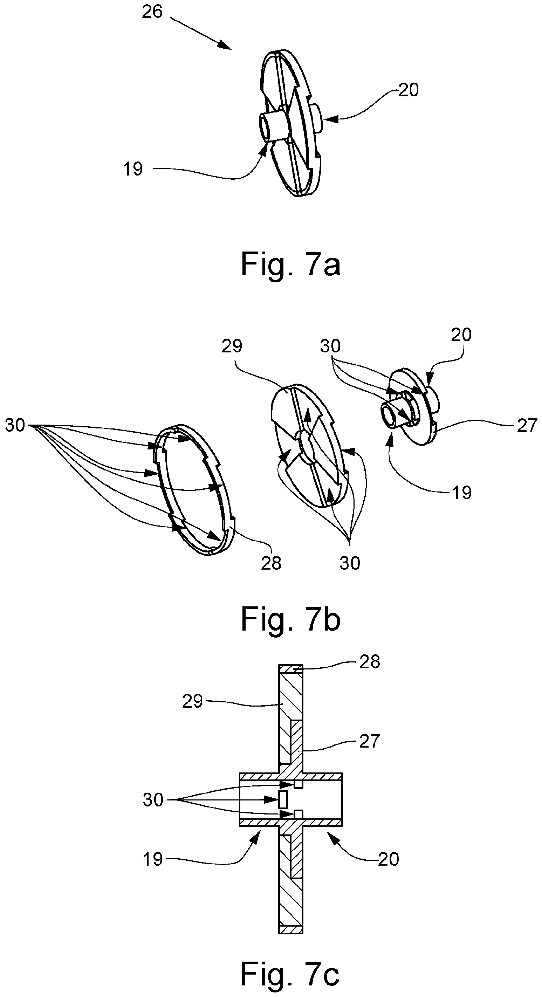

Fig. 7a bis 7b zeigen ein zweites Ausführungsbeispiel eines Zellverbinders 26 zur elektrischen Parallelschaltung. Im Einzelnen zeigt Fig. 7a den Zellverbinder 26 in perspektivischer Ansicht, Fig. 7b die Komponenten des Zellverbinders 26 entlang seiner Längsachse auseinandergezogen und Fig. 7c einen Längsschnitt des Zellverbinders 26.

Im Folgenden werden nur die Unterschiede des Zellverbinders gemäß dem zweiten Ausführungsbeispiel gegenüber dem des ersten Ausführungsbeispiels erläutert.

Und zwar sind im Hohlzylinder des ersten elektrischen Verbindungsleiters 27, im ringförmigen zweiten elektrischen Verbindungsleiter 28 und im Verbindungsisolator 29 radial verlaufende Ausnehmungen 30 ausgebildet, sodass, wenn ein Medium zur Temperierung von Zellen 1 durch den Zellverbinder 26 strömt, auch ein Teil des Mediums durch die radial verlaufenden Ausnehmungen 30 strömt.

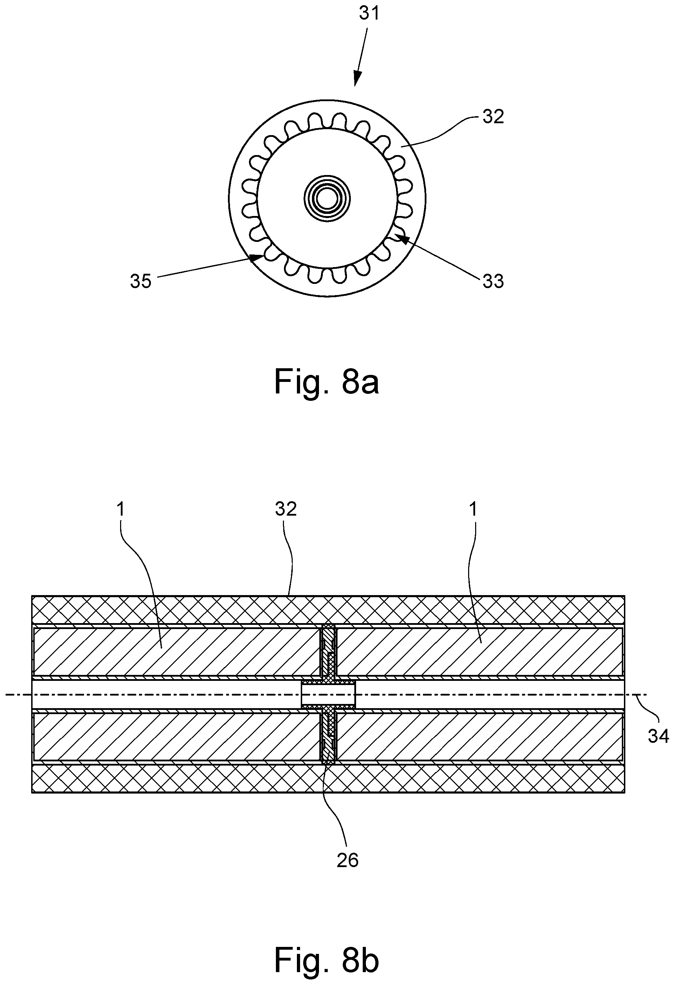

Fig. 8a zeigt ein Ausführungsbeispiel eines Zellmoduls 31 in perspektivischer Ansicht und Fig. 8b einen Längsschnitt des Ausführungsbeispiels.

Das Zellmodul 31 weist zwei Zellen 1, einen Zellverbinder 26, ein Modulgehäuse 32 mit einem Modulinnenraum 33, einer Modullängsachse 34 und einer Innenquerschnittskontor 35 des Modulinnenraums 33 auf. Die Innenquerschnittskontur 35 weist Längsrippen auf und ist derart an die Außenmäntel 4 der zwei Zellen 1 angepasst, sodass die zwei Zellen 1 und der Zellverbinder 26 in den Modulinnenraum 33 entlang der Modullängsachse 34 einschiebbar sind, die mindestens zwei Zellen 1 radial zur Modullängsachse 34 im Modulinnenraum 33 positioniert sind und zwischen einerseits den Außenmänteln 4 der zwei Zellen 1 und dem Zellverbinder 26 und andererseits dem Modulinnenraum 33 ein Medium zur Temperierung der Zellen 1 aufnehmbar ist. Zum Beispiel ist ein flüssiges Medium zwischen einerseits den Außenmänteln 4 der zwei Zellen 1 und dem Zellverbinder und andererseits dem Modulinnenraum 33 durchströmbar. Das gleiche Medium ist auch durch die Innenmäntel 4 strömbar.

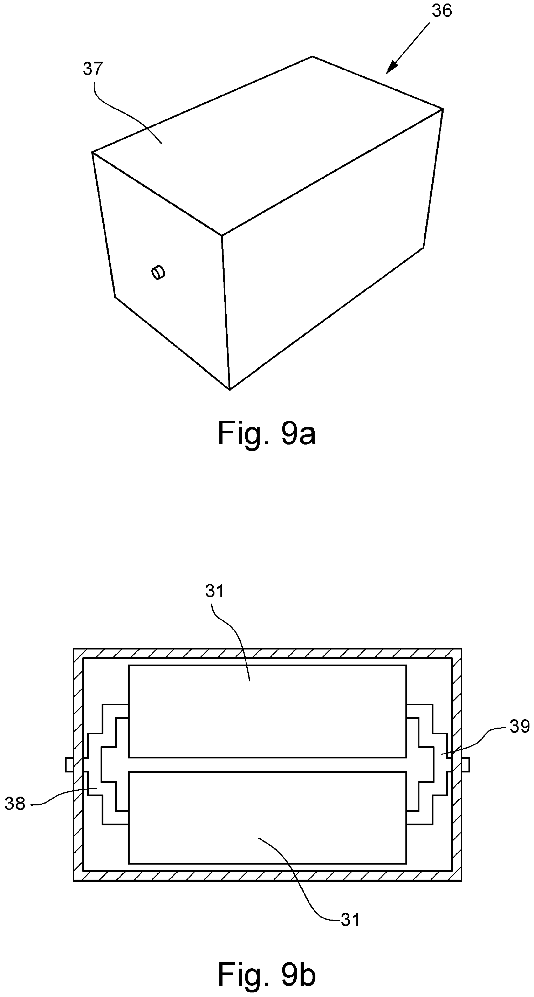

Fig. 9a zeigt ein Ausführungsbeispiel eines Batteriemoduls 36 in perspektivischer Ansicht und Fig. 9b einen Längsschnitt des Ausführungsbeispiels.

Das Batteriemodul 36 weist ein Batteriegehäuse 37 mit zwei Zellmodulen 31 in seinem Innenraum, einen ersten Batterieanschluss 38 und einen zweiten Batterieanschluss 39 auf. Die Zellmodule 31 sind zum einen durch die beiden Batterieanschlüsse 38, 39 elektrisch parallel geschaltet. Dabei ist der erste Batterieanschluss 38 der Pluspol und der zweite Batterieanschluss 39 der Minuspol. Zum anderen ist durch die Batterieanschlüsse 38, 39 auch ein Medium zur Temperierung der Zellen 1 in den Zellmodulen 31 strömbar. Durch den ersten Batterieanschluss 38 ist ein Medium zuführbar und durch den zweiten Batterieanschluss 39 abführbar.

### Bezugszeichen

- 1: Zelle
- 2: elektrischer Energiespeicher
- 3: Gehäuse
- 4: Außenmantel
- 5: Innenmantel
- 6: erste Kappe
- 7: zweite Kappe
- 8: erster Zellleiter
- 9: zweiter Zellleiter
- 10: erste Buchse
- 11: zweite Buchse
- 12: erster Energiespeicherpol
- 13: zweiter Energiespeicherpol
- 14: Zellverbinder zur elektrischen Serienschaltung
- 15: elektrischer Verbindungsleiter
- 16: erster Verbindungsisolator
- 17: zweiter Verbindungsisolator
- 18: Verbindungselement
- 19: erster Stecker
- 20: zweiter Stecker
- 21: erste Kragenseite
- 22: zweite Kragenseite
- 23: Verbindungsmittel
- 24: Dichtmittel
- 25: Nut
- 26: Zellverbinder zur elektrischen Parallelschaltung
- 27: erster elektrischer Verbindungsleiter
- 28: zweiter elektrischer Verbindungsleiter
- 29: Verbindungsisolator
- 30: Ausnehmung
- 31: Zellmodul
- 32: Modulgehäuse
- 33: Modulinnenraum
- 34: Modullängsachse
- 35: Innenquerschnittskontur
- 36: Batteriemodul
- 37: Batteriegehäuse
- 38: erster Batterieanschluss
- 39: zweiter Batterieanschluss

## Patentansprüche

1. Zellverbinder (26) zur elektrischen Parallelschaltung einer ersten Zelle (1) und einer zweiten Zelle (1) miteinander,
wobei eine jede der Zellen (1) ein hohlzylinderförmiges Gehäuse (3) aufweist, wobei das Gehäuse (3) einen Außenmantel (4), einen Innenmantel (5), eine erste Kappe (6) und eine zweite Kappe (7) aufweist, wobei einerseits der Innenmantel (5) und die erste Kappe (6) einen ersten elektrischen Zellleiter (8) und andererseits der Außenmantel (4) und die zweite Kappe (7) einen zweiten elektrischen Zellleiter (9) bilden und wobei der Innenmantel (5) einerseits an der ersten Kappe (6) eine erste Buchse (10) und andererseits an der zweiten Kappe (7) eine zweite Buchse (11) aufweist,
**dadurch gekennzeichnet,**
**dass** der Zellverbinder (26) einen ersten elektrischen Verbindungsleiter (27), einen zweiten elektrischen Verbindungsleiter (28) und einen Verbindungsisolator (29) aufweist,
**dass** der Zellverbinder (26) zur Anordnung zwischen einer der Kappen (6, 7) der ersten Zelle (1) und einer der Kappen (7, 6) der zweiten Zelle (1) ausgebildet ist,
**dass** zum einen der erste elektrische Verbindungsleiter (27) und der Verbindungsisolator (29) und zum anderen der zweite elektrische Verbindungsleiter (28) und der Verbindungsisolator (29) miteinander verbunden sind, sodass der erste elektrische Verbindungsleiter (27) und der zweite elektrische Verbindungsleiter (28) voneinander elektrisch isoliert sind,
**dass** der erste elektrische Verbindungsleiter (27) einen ersten Stecker (19) und einen zweiten Stecker (20) aufweist,
**dass** der erste Stecker (19) komplementär zu einer der Buchsen (10, 11) der ersten Zelle (1) und der zweite Stecker (20) komplementär zu einer der Buchsen (11, 10) der zweiten Zelle (1) ausgebildet ist,
**dass** der erste elektrische Verbindungsleiter (27) ausgebildet ist, die Buchse (10, 11) der ersten Zelle (1) und die Buchse (11, 10) der zweiten Zelle (1) elektrisch miteinander zu verbinden,
**dass** der zweite elektrische Verbindungsleiter (28) ausgebildet ist, den zweiten elektrischen Zellleiter (9) der ersten Zelle (1) und den zweiten elektrischen Zellleiter (9) der zweiten Zelle (1) elektrisch miteinander zu verbinden und
**dass** der erste elektrische Verbindungsleiter (27) inklusive dem ersten Stecker (19) und dem zweiten Stecker (20) zur Aufnahme eines Mediums zur Temperierung von Zellen (1) ausgebildet ist.

2. Zellverbinder (26) nach Anspruch 1, **dadurch gekennzeichnet, dass** der erste elektrische Verbindungsleiter (27) inklusive dem ersten Stecker (19) und dem zweiten Stecker (20) zur Durchströmung mit einem Medium zur Temperierung von Zellen (1) ausgebildet ist.

3. Zellverbinder (26) nach Anspruch 1 oder 2, **dadurch gekennzeichnet,**
**dass** der erste elektrische Verbindungsleiter (27) ein Hohlzylinder mit einem Kragen ist, der erste Stecker (19) und der zweite Stecker (20) am Hohlzylinder ausgebildet sind und der Verbindungsisolator (29) unmittelbar um den Hohlzylinder und unmittelbar auf dem Kragen angeordnet ist und
**dass** der zweite elektrische Verbindungsleiter (28) ein Ring ist und unmittelbar um den Verbindungsisolator (29) angeordnet ist.

4. Zellverbinder (26) nach einem der Ansprüche 1 bis 3, **dadurch gekennzeichnet, dass** der erste elektrische Verbindungsleiter (27) und/oder der zweite elektrische Verbindungsleiter (28) und/oder der Verbindungsisolator (29) einstückig und aus einem einzigen Stück hergestellt sind bzw. ist.

5. Zellverbinder (26) nach einem der Ansprüche 1 bis 4, **dadurch gekennzeichnet,**
**dass** der Verbindungsisolator (29) Verbindungsmittel zur Verbindung mit dem ersten elektrischen Verbindungsleiter (27) und/oder dem zweiten elektrischen Verbindungsleiter (28) aufweist und
**dass** der erste elektrische Verbindungsleiter (27) und/oder der zweite elektrische Verbindungsleiter (28) komplementär zum Verbindungsmittel ausgebildet sind.

6. Zellverbinder (26) nach einem der Ansprüche 1 bis 5, **dadurch gekennzeichnet, dass** der Verbindungsisolator (29) ein Spritzgussteil ist.

7. Zellverbinder (14) zur elektrischen Serienschaltung einer ersten Zelle (1) und einer zweiten Zelle (1) miteinander,
wobei eine jede der Zellen (1) ein hohlzylinderförmiges Gehäuse (3) aufweist, wobei das Gehäuse (3) einen Außenmantel (4), einen Innenmantel (5), eine erste Kappe (6) und eine zweite Kappe (7) aufweist, wobei einerseits der Innenmantel (5) und die erste Kappe (6) einen ersten elektrischen Zellleiter (8) und andererseits der Außenmantel (4) und die zweite Kappe (7) einen zweiten elektrischen Zellleiter (9) bilden und wobei der Innenmantel (5) einerseits an der ersten Kappe (6) eine erste Buchse (10) und andererseits an der zweiten Kappe (7) eine zweite Buchse (11) aufweist,
**dadurch gekennzeichnet,**
**dass** der Zellverbinder (14) einen elektrischen Verbindungsleiter (15), einen ersten Verbindungsisolator (16), einen zweiten Verbindungsisolator (17) und ein Verbindungselement (18) aufweist,
**dass** der Zellverbinder (14) zur Anordnung zwischen einer der Kappen (6, 7) der ersten Zelle (1) und einer der Kappen (7, 6) der zweiten Zelle (1) ausgebildet ist,
**dass** zum einen der elektrische Verbindungsleiter (15) und der erste Verbindungsisolator (16) und zum anderen das Verbindungselement (18) und der erste Verbindungsisolator (16) miteinander verbunden sind, sodass der elektrische Verbindungsleiter (15) und das Verbindungselement (18) voneinander elektrisch isoliert sind,
**dass** der elektrische Verbindungsleiter (15) mit dem zweiten Verbindungsisolator (17) verbunden ist,
**dass** der elektrische Verbindungsleiter (15) einen ersten Stecker (19) und das Verbindungselement (18) einen zweiten Stecker (20) aufweist,
**dass** der erste Stecker (19) komplementär zu einer der Buchsen (10, 11) der ersten Zelle (1) und der zweite Stecker (20) komplementär zu einer der Buchsen (11, 10) der zweiten Zelle (1) ausgebildet ist,
**dass** der elektrische Verbindungsleiter (15) ausgebildet ist, die Buchse (10, 11) der ersten Zelle (1) und den zweiten elektrischen Zellleiter (9) der zweiten Zelle (1) elektrisch miteinander zu verbinden und
**dass** der elektrische Verbindungsleiter (15) inklusive dem ersten Stecker (19), der erste Verbindungsisolator (16) und das Verbindungselement (18) inklusive dem zweiten Stecker (20) zur Aufnahme eines Mediums zur Temperierung von Zellen (1) ausgebildet sind.

8. Zellverbinder (14) nach Anspruch 7, **dadurch gekennzeichnet, dass** der elektrische Verbindungsleiter (15) inklusive dem ersten Stecker (19), der erste Verbindungsisolator (16) und das Verbindungselement (18) inklusive dem zweiten Stecker (20) zur Durchströmung mit einem Medium zur Temperierung von Zellen (1) ausgebildet sind.

9. Zellverbinder (14) nach Anspruch 7 oder 8, **dadurch gekennzeichnet, dass** sowohl der erste Verbindungsisolator (16) als auch der zweite Verbindungsisolator (17) ein Ring ist,
dass der elektrische Verbindungsleiter (15) ein Hohlzylinder mit einem topfförmigen Kragen ist, der Kragen eine erste Kragenseite (21) und eine zweite Kragenseite (22) aufweist, der erste Stecker (19) am Hohlzylinder ausgebildet ist, die erste Kragenseite (21) unmittelbar auf dem ersten Verbindungsisolator (16) und die zweite Kragenseite (22) unmittelbar auf dem zweiten Verbindungsisolator (17) angeordnet ist und
dass das Verbindungselement (18) ein Hohlzylinder mit einem Kragen ist, der zweite Stecker (20) am Hohlzylinder ausgebildet ist und der Kragen unmittelbar auf dem ersten Verbindungsisolator (16) angeordnet ist.

10. Zellverbinder (14) nach einem der Ansprüche 7 bis 9, **dadurch gekennzeichnet, dass** der elektrische Verbindungsleiter (15) und/oder das Verbindungselement (18) und/oder der erste Verbindungsisolator (16) und/oder der zweite Verbindungsisolator (17) einstückig und aus einem einzigen Stück hergestellt sind bzw. ist.

11. Zellverbinder (14) nach einem der Ansprüche 7 bis 10, **dadurch gekennzeichnet,**
**dass** der erste Verbindungsisolator (16) Verbindungsmittel zur Verbindung mit dem Verbindungselement (18) und/oder dem elektrischen Verbindungsleiter (15) aufweist und/oder dass der zweite Verbindungsisolator (17) Verbindungsmittel zur Verbindung mit dem elektrischen Verbindungsleiter (15) aufweist und
**dass** das Verbindungselement (18) und/oder der elektrische Verbindungsleiter (15) komplementär zum Verbindungsmittel ausgebildet sind.

12. Zellverbinder (14) nach einem der Ansprüche 7 bis 11, **dadurch gekennzeichnet, dass** der erste Verbindungsisolator (16) und/oder der zweite Verbindungsisolator (17) ein Spritzgussteil sind/ist.

13. Zellverbinder (14, 26) nach einem der Ansprüche 1 bis 12, **dadurch gekennzeichnet, dass** der Zellverbinder (14, 26) zur Abdichtung zwischen der Kappe (6, 7) der ersten Zelle (1) und der Kappe (7, 6) der zweiten Zelle (1) ausgebildet ist.

14. Zellverbinder (26) nach Anspruch 13 und einem der Ansprüche 1 bis 6, **dadurch gekennzeichnet, dass** der Verbindungsisolator (29) Dichtmittel (24) zur Abdichtung aufweist.

15. Zellverbinder (14) nach Anspruch 13 und einem der Ansprüche 7 bis 12, **dadurch gekennzeichnet, dass** der erste Verbindungsisolator (16) und der zweite Verbindungsisolator (17) Dichtmittel (24) zur Abdichtung aufweisen.

16. Zellverbinder (14, 26) nach einem der Ansprüche 1 bis 15, **dadurch gekennzeichnet, dass** im Zellverbinder (14, 26) radial verlaufende Ausnehmungen (30) sind, sodass, wenn ein Medium zur Temperierung von Zellen (1) durch den Zellverbinder (14, 26) geströmt wird, ein Teil des Mediums durch die radial verlaufenden Ausnehmungen (30) strömt.

17. Zellverbinder (26) nach den Ansprüchen 16 und 3, **dadurch gekennzeichnet, dass** die Ausnehmungen (30) im Hohlzylinder und im Ring und im Kragen und/oder im Verbindungsisolator (29) ausgebildet sind.

18. Zellverbinder (14) nach den Ansprüchen 16 und 9, **dadurch gekennzeichnet, dass** die Ausnehmungen (30)im Hohlzylinder des elektrischen Verbindungsleiters (15) und im Kragen und/oder im zweiten Verbindungsisolator (17) ausgebildet sind.

19. Zellverbinder (14) nach den Ansprüchen 16 und 9, **dadurch gekennzeichnet, dass** die Ausnehmungen (30) im ersten Verbindungsisolator (16) und/oder im Kragen des elektrischen Verbindungsleiter (15) ausgebildet sind.

20. Zellmodul (31) mit mindestens zwei Zellen (1) und mindestens einem Zellverbinder (14, 26),
wobei die mindestens zwei Zellen (1) durch den mindestens einen Zellverbinder (14, 26) elektrisch miteinander verschaltet sind,
**dadurch gekennzeichnet,**
**dass** der mindestens eine Zellverbinder (14, 26) nach einem der Ansprüche 1 bis 19 ausgebildet ist.

21. Zellmodul (31) nach Anspruch 20, **dadurch gekennzeichnet,**
**dass** das Zellmodul (31) ein Modulgehäuse (32) mit einem Modulinnenraum (33), einer Modullängsachse (34) und einer Innenquerschnittskontor (35) des Modulinnenraums (33) aufweist und
**dass** die Innenquerschnittskontor (35) derart an die Außenmäntel (4) der mindestens zwei Zellen (1) angepasst ist, sodass die mindestens zwei Zellen (1) und der mindestens eine Zellverbinder (14, 26) in den Modulinnenraum (33) einschiebbar sind, die mindestens zwei Zellen (1) radial zur Modullängsachse (34) im Modulinnenraum (33) positioniert sind und zwischen einerseits den Außenmänteln (4) der mindestens zwei Zellen (1) und dem mindestens einen Zellverbinder (14, 26) und andererseits dem Modulinnenraum (33) ein Medium zur Temperierung von Zellen (1) aufnehmbar ist.

22. Zellmodul (31) nach Anspruch 21, **dadurch gekennzeichnet, dass** zwischen einerseits den Außenmänteln (4) der mindestens zwei Zellen (1) und dem mindestens einen Zellverbinder (14, 26) und andererseits dem Modulinnenraum (33) ein Medium zur Temperierung von Zellen (1) durchströmbar ist.

23. Zellmodul (31) nach Anspruch 21 oder 22, **dadurch gekennzeichnet, dass** das Modulgehäuse (32) elektrisch leitend ist,
dass die mindestens zwei Zellen (1) durch den mindestens einen Zellverbinder (26) elektrisch parallel geschaltet sind und
dass die Außenmäntel (4) der mindestens zwei Zellen (1) durch den Modulinnenraum (33) elektrisch miteinander verbunden sind.

24. Zellmodul (31) nach Anspruch 21 oder 22, **dadurch gekennzeichnet,**
**dass** das Modulgehäuse (32) im Modulinnenraum (33) elektrisch isolierend ist und
**dass** die mindestens zwei Zellen (1) durch den mindestens einen Zellverbinder (14) elektrisch in Serie geschaltet sind.

25. Zellmodul (31) nach einem der Ansprüche 21 bis 24, **dadurch gekennzeichnet, dass** die Innenquerschnittskontor (35) Rippen aufweist.

26. Zellmodul (31) nach einem der Ansprüche 20 bis 25, **dadurch gekennzeichnet, dass** im Modulgehäuse (32) Zugänge zur Messung von Spannungen und/oder Temperaturen von Zellen (1) ausgebildet sind.

27. Batteriemodul mit mindestens zwei Zellmodulen (31),
**dadurch gekennzeichnet,**
**dass** mindestens eines der Zellmodule (31) nach einem der Ansprüche 20 bis 26 ausgebildet ist.

## Claims

1. Cell connector (26) for electrically connecting a first cell (1) and a second cell (1) in parallel with each other
wherein each of the cells (1) has a hollow cylindrical housing (3), wherein the housing (3) has an outer casing (4), an inner casing (5), a first cap (6) and a second cap (7), wherein on the one hand the inner casing (5) and the first cap (6) form a first electrical cell conductor (8) and on the other hand the outer casing (4) and the second cap (7) form a second electrical cell conductor (9) and wherein the inner casing (5) has, on the one hand, a first socket (10) on the first cap (6) and, on the other hand, a second socket (11) on the second cap (7),
**characterized in**
**that** the cell connector (26) has a first electrical connecting conductor (27), a second electrical connecting conductor (28) and a connecting insulator (29),
**that** the cell connector (26) is designed to be arranged between one of the caps (6, 7) of the first cell (1) and one of the caps (7, 6) of the second cell (1),
**that**, on the one hand, the first electrical connecting conductor (27) and the connecting insulator (29) and, on the other hand, the second electrical connecting conductor (28) and the connecting insulator (29) are connected to one another, so that the first electrical connecting conductor (27) and the second electrical connecting conductor (28) are electrically insulated from one another,
**that** the first electrical connecting conductor (27) has a first plug (19) and a second plug (20),
**that** the first plug (19) is designed to complement one of the sockets (10, 11) of the first cell (1) and the second plug (20) is designed to complement one of the sockets (11, 10) of the second cell (1),
**that** the first electrical connecting conductor (27) is designed to electrically connect the socket (10, 11) of the first cell (1) and the socket (11, 10) of the second cell (1) to one another,
**that** the second electrical connecting conductor (28) is designed to electrically connect the second electrical cell conductor (9) of the first cell (1) and the second electrical cell conductor (9) of the second cell (1) to one another, and that the first electrical connecting conductor (27) including the first plug (19) and the second plug (20) is designed to receive a medium for temperature conditioning of cells (1).

2. Cell connector (26) according to claim 1, **characterized in that** the first electrical connecting conductor (27), including the first plug (19) and the second plug (20), is designed for the flow of a medium for temperature conditioning of cells (1).

3. Cell connector (26) according to claim 1 or 2, **characterized in**
**that** the first electrical connecting conductor (27) is a hollow cylinder with a collar, the first plug (19) and the second plug (20) are designed on the hollow cylinder and the connecting insulator (29) is arranged directly around the hollow cylinder and directly on the collar, and
**that** the second electrical connecting conductor (28) is a ring and is arranged directly around the connecting insulator (29).

4. Cell connector (26) according to any one of claims 1 to 3, **characterized in that** the first electrical connecting conductor (27) and/or the second electrical connecting conductor (28) and/or the connecting insulator (29) are or is made in one piece and from a single piece.

5. Cell connector (26) according to any one of claims 1 to 4, **characterized in**
**that** the connecting insulator (29) has connecting means for connection to the first electrical connecting conductor (27) and/or the second electrical connecting conductor (28), and
**that** the first electrical connecting conductor (27) and/or the second electrical connecting conductor (28) are designed to be complementary to the connecting means.

6. Cell connector (26) according to any one of claims 1 to 5, **characterized in that** the connection insulator (29) is an injection molded part.

7. Cell connector (14) for electrically connecting a first cell (1) and a second cell (1) in series with each other,
wherein each of the cells (1) has a hollow cylindrical housing (3), wherein the housing (3) has an outer casing (4), an inner casing (5), a first cap (6) and a second cap (7), wherein, on the one hand, the inner casing (5) and the first cap (6) form a first electrical cell conductor (8) and, on the other hand, the outer casing (4) and the second cap (7) form a second electrical cell conductor (9) and wherein the inner casing (5) has on the one hand a first socket (10) on the first cap (6) and on the other hand a second socket (11) on the second cap (7),
**characterized in**
**that** the cell connector (14) has an electrical connecting conductor (15), a first connecting insulator (16), a second connecting insulator (17) and a connecting element (18),
**that** the cell connector (14) is designed to be arranged between one of the caps (6, 7) of the first cell (1) and one of the caps (7, 6) of the second cell (1),
**that**, on the one hand, the electrical connecting conductor (15) and the first connecting insulator (16) and, on the other hand, the connecting element (18) and the first connecting insulator (16) are connected to one another, so that the electrical connecting conductor (15) and the connecting element (18) are electrically insulated from one another,
**that** the electrical connecting conductor (15) is connected to the second connecting insulator (17),
**that** the electrical connecting conductor (15) has a first plug (19) and the connecting element (18) has a second plug (20),
**that** the first plug (19) is designed to complement one of the sockets (10, 11) of the first cell (1) and the second plug (20) is designed to complement one of the sockets (11, 10) of the second cell (1),
**that** the electrical connecting conductor (15) is designed to electrically connect the socket (10, 11) of the first cell (1) and the second electrical cell conductor (9) of the second cell (1) to one another, and
**that** the electrical connecting conductor (15) including the first plug (19), the first connecting insulator (16) and the connecting element (18) including the second plug (20) are designed to receive a medium for temperature conditioning of cells (1).

8. Cell connector (14) according to claim 7, **characterized in that** the electrical connecting conductor (15) including the first plug (19), the first connecting insulator (16) and the connecting element (18) including the second plug (20) are designed for the flow of a medium for temperature conditioning of cells (1).

9. Cell connector (14) according to claim 7 or 8, **characterized in**
**that** both the first connecting insulator (16) and the second connecting insulator (17) are a ring,
**that** the electrical connecting conductor (15) is a hollow cylinder with a cup-shaped collar, the collar has a first collar side (21) and a second collar side (22), the first plug (19) is designed on the hollow cylinder, the first collar side (21) is arranged directly on the first connecting insulator (16) and the second collar side (22) is arranged directly on the second connecting insulator (17), and
**that** the connecting element (18) is a hollow cylinder with a collar, the second plug (20) is designed on the hollow cylinder and the collar is arranged directly on the first connecting insulator (16).

10. Cell connector (14) according to any one of claims 7 to 9, **characterized in that** the electrical connecting conductor (15) and/or the connecting element (18) and/or the first connecting insulator (16) and/or the second connecting insulator (17) are or is made in one piece and from a single piece.

11. Cell connector (14) according to any one of claims 7 to 10, **characterized in**
**that** the first connecting insulator (16) comprises connecting means for connection to the connecting element (18) and/or the electrical connecting conductor (15) and/or that the second connecting insulator (17) comprises connecting means for connection to the electrical connecting conductor (15) and
**that** the connecting element (18) and/or the electrical connecting conductor (15) are designed to complement the connecting means.

12. Cell connector (14) according to any one of claims 7 to 11, **characterized in that** the first connecting insulator (16) and/or the second connecting insulator (17) is/are an injection-molded part.

13. Cell connector (14, 26) according to any one of claims 1 to 12, **characterized in that** the cell connector (14, 26) is designed for sealing between the cap (6, 7) of the first cell (1) and the cap (7, 6) of the second cell (1).

14. Cell connector (26) according to claim 13 and any one of claims 1 to 6, **characterized in that** the connection insulator (29) comprises sealing means (24) for sealing.

15. Cell connector (14) according to claim 13 and any one of claims 7 to 12, **characterized in that** the first connecting insulator (16) and the second connecting insulator (17) comprise sealing means (24) for sealing.

16. Cell connector (14, 26) according to any one of claims 1 to 15, **characterized in that** there are radially extending recesses (30) in the cell connector (14, 26), so that when a medium for temperature conditioning of cells (1) is made to flow through the cell connector (14, 26), part of the medium flows through the radially extending recesses (30).

17. Cell connector (26) according to claims 16 and 3, **characterized in that** the recesses (30) are designed in the hollow cylinder and in the ring and in the collar and/or in the connecting insulator (29).

18. Cell connector (14) according to claims 16 and 9, **characterized in that** the recesses (30) are designed in the hollow cylinder of the electrical connecting conductor (15) and in the collar and/or in the second connecting insulator (17).

19. Cell connector (14) according to claims 16 and 9, **characterized in that** the recesses (30) are designed in the first connecting insulator (16) and/or in the collar of the electrical connecting conductor (15).

20. Cell module (31) with at least two cells (1) and at least one cell connector (14, 26),
wherein the at least two cells (1) are electrically interconnected by the at least one cell connector (14, 26),
**characterized in**
**that** the at least one cell connector (14, 26) is designed according to any one of claims 1 to 19.

21. Cell module (31) according to claim 20, **characterized in**
**that** the cell module (31) has a module housing (32) with a module interior (33), a module longitudinal axis (34) and an inner cross-sectional contour (35) of the module interior (33), and
**that** the inner cross-sectional contour (35) is adapted to the outer casings (4) of the at least two cells (1) in such a way that the at least two cells (1) and the at least one cell connector (14, 26) can be pushed into the module interior (33), the at least two cells (1) are positioned radially to the module longitudinal axis (34) in the module interior (33) and a medium for temperature conditioning of the cells (1) can be accommodated between, on the one hand, the outer casings (4) of the at least two cells (1) and the at least one cell connector (14, 26) and, on the other hand, the module interior (33).

22. Cell module (31) according to claim 21, **characterized in that** a medium for temperature conditioning of cells (1) can flow between, on the one hand, the outer casings (4) of the at least two cells (1) and the at least one cell connector (14, 26) and, on the other hand, the module interior (33).

23. Cell module (31) according to claim 21 or 22, **characterized in that** the module housing (32) is electrically conductive,
that the at least two cells (1) are electrically connected in parallel by the at least one cell connector (26), and
that the outer casings (4) of the at least two cells (1) are electrically connected to one another by the module interior (33).

24. Cell module (31) according to claim 21 or 22, **characterized in that**
that the module housing (32) in the module interior (33) is electrically insulating, and
that the at least two cells (1) are electrically connected in series by the at least one cell connector (14).

25. Cell module (31) according to any one of claims 21 to 24, **characterized in that** the inner cross-sectional contour (35) comprises ribs.

26. Cell module (31) according to any one of claims 20 to 25, **characterized in that** access for measuring voltages and/or temperatures of cells (1) is designed in the module housing (32).

27. Battery module with at least two cell modules (31),
**characterized in**
**that** at least one of the cell modules (31) is designed according to any one of claims 20 to 26.

## Revendications

1. Connecteur intercellulaire (26) pour le montage électrique en parallèle d'une première cellule (1) et d'une deuxième cellule (1) l'une avec l'autre,
chacune des cellules (1) présentant un boîtier (3) en forme de cylindre creux, le boîtier (3) présentant une enveloppe extérieure (4), une enveloppe intérieure (5), un premier capuchon (6) et un deuxième capuchon (7), dans lequel d'une part l'enveloppe intérieure (5) et le premier capuchon (6) forment un premier conducteur de cellule électrique (8) et d'autre part l'enveloppe extérieure (4) et le deuxième capuchon (7) forment un deuxième conducteur de cellule électrique (9), et dans lequel l'enveloppe intérieure (5) présente d'une part une première douille (10) au niveau du premier capuchon (6) et d'autre part une deuxième douille (11) au niveau du deuxième capuchon (7),
**caractérisé**
**en ce que** le connecteur intercellulaire (26) présente un premier conducteur de liaison électrique (27), un deuxième conducteur de liaison électrique (28) et un isolateur de liaison (29),
**en ce que** le connecteur intercellulaire (26) est réalisé pour être agencé entre l'un des capuchons (6, 7) de la première cellule (1) et l'un des capuchons (7, 6) de la deuxième cellule (1),
**en ce que** d'une part le premier conducteur de liaison électrique (27) et l'isolateur de liaison (29) et d'autre part le deuxième conducteur de liaison électrique (28) et l'isolateur de liaison (29) sont reliés ensemble de sorte que le premier conducteur de liaison électrique (27) et le deuxième conducteur de liaison électrique (28) sont isolés électriquement l'un par rapport à l'autre, en ce que le premier conducteur de liaison électrique (27) présente un premier connecteur (19) et un deuxième connecteur (20),
**en ce que** le premier connecteur (19) est complémentaire à l'une des douilles (10, 11) de la première cellule (1) et le deuxième connecteur (20) est complémentaire à l'une des douilles (11, 10) de la deuxième cellule (1),
**en ce que** le premier conducteur de liaison électrique (27) est réalisé pour relier électriquement l'une à l'autre la douille (10, 11) de la première cellule (1) et la douille (11, 10) de la deuxième cellule (1),
**en ce que** le deuxième conducteur de liaison électrique (28) est réalisé pour relier électriquement l'un à l'autre le deuxième conducteur de cellule électrique (9) de la première cellule (1) et le deuxième conducteur de cellule électrique (9) de la deuxième cellule (1), et
**en ce que** le premier conducteur de liaison électrique (27) avec le premier connecteur (19) et le deuxième connecteur (20) est réalisé pour recevoir un milieu pour l'équilibrage de température de cellules (1).

2. Connecteur intercellulaire (26) selon la revendication 1, **caractérisé en ce que** le premier conducteur de liaison électrique (27) avec le premier connecteur (19) et le deuxième connecteur (20) est réalisé pour être traversé par un milieu pour l'équilibrage de température de cellules (1).

3. Connecteur intercellulaire (26) selon la revendication 1 ou 2, **caractérisé en ce que** le premier conducteur de liaison électrique (27) est un cylindre creux à collerette, le premier connecteur (19) et le deuxième connecteur (20) sont réalisés au niveau du cylindre creux, et l'isolateur de liaison (29) est disposé directement autour du cylindre creux et directement sur la collerette, et
**en ce que** le deuxième conducteur de liaison électrique (28) est un anneau et est disposé directement autour de l'isolateur de liaison (29).

4. Connecteur intercellulaire (26) selon l'une quelconque des revendications 1 à 3, **caractérisé en ce que** le premier conducteur de liaison électrique (27) et/ou le deuxième conducteur de liaison électrique (28) et/ou l'isolateur de liaison (29) sont fabriqués d'un seul tenant et à partir d'une seule pièce.

5. Connecteur intercellulaire (26) selon l'une quelconque des revendications 1 à 4, **caractérisé**
**en ce que** l'isolateur de liaison (29) présente des moyens de liaison pour la liaison au premier conducteur de liaison électrique (27) et/ou au deuxième conducteur de liaison électrique (28), et
**en ce que** le premier conducteur de liaison électrique (27) et/ou le deuxième conducteur de liaison électrique (28) sont réalisés de manière complémentaire au moyen de liaison.

6. Connecteur intercellulaire (26) selon l'une quelconque des revendications 1 à 5, **caractérisé en ce que** l'isolateur de liaison (29) est une pièce moulée par injection.

7. Connecteur intercellulaire (14) permettant le montage électrique en série d'une première cellule (1) et d'une deuxième cellule (1) l'une avec l'autre,
chacune des cellules (1) présentant un boîtier (3) en forme de cylindre creux, le boîtier (3) présentant une enveloppe extérieure (4), une enveloppe intérieure (5), un premier capuchon (6) et un deuxième capuchon (7), dans lequel d'une part l'enveloppe intérieure (5) et le premier capuchon (6) forment un premier conducteur de cellule électrique (8) et d'autre part l'enveloppe extérieure (4) et le deuxième capuchon (7) forment un deuxième conducteur de cellule électrique (9), et dans lequel l'enveloppe intérieure (5) présente d'une part une première douille (10) au niveau du premier capuchon (6) et d'autre part une deuxième douille (11) au niveau du deuxième capuchon (7),
**caractérisé**
**en ce que** le connecteur intercellulaire (14) présente un conducteur de liaison électrique (15), un premier isolateur de liaison (16), un deuxième isolateur de liaison (17) et un élément de liaison (18),
**en ce que** le connecteur intercellulaire (14) est réalisé pour être agencé entre l'un des capuchons (6, 7) de la première cellule (1) et l'un des capuchons (7, 6) de la deuxième cellule (1),
**en ce que** d'une part le conducteur de liaison électrique (15) et le premier isolateur de liaison (16) et d'autre part l'élément de liaison (18) et le premier isolateur de liaison (16) sont reliés l'un à l'autre de sorte que le premier conducteur de liaison électrique (15) et l'élément de liaison (18) sont isolés électriquement l'un par rapport à l'autre,
**en ce que** le conducteur de liaison électrique (15) est relié au deuxième isolateur de liaison (17),
**en ce que** le conducteur de liaison électrique (15) présente un premier connecteur (19) et l'élément de liaison (18) présente un deuxième connecteur (20),
**en ce que** le premier connecteur (19) est complémentaire à l'une des douilles (10, 11) de la première cellule (1) et le deuxième connecteur (20) est complémentaire à l'une des douilles (11, 10) de la deuxième cellule (1),
**en ce que** le conducteur de liaison électrique (15) est réalisé pour relier la douille (10, 11) de la première cellule (1) et le deuxième conducteur de cellule électrique (9) de la deuxième cellule (1) électriquement l'un à l'autre, et
**en ce que** le conducteur de liaison électrique (15) avec le premier connecteur (19), le premier isolateur de liaison (16) et l'élément de liaison (18) avec le deuxième connecteur (20) sont réalisés pour recevoir un milieu pour l'équilibrage de température de cellules (1).

8. Connecteur intercellulaire (14) selon la revendication 7, **caractérisé en ce que** le conducteur de liaison électrique (15) avec le premier connecteur (19), le premier isolateur de liaison (16) et l'élément de liaison (18) avec le deuxième connecteur (20) sont réalisés pour être traversés par un milieu pour l'équilibrage de température de cellules (1).

9. Connecteur intercellulaire (14) selon la revendication 7 ou 8, **caractérisé en ce qu'**à la fois le premier isolateur de liaison (16) et le deuxième isolateur de liaison (17) sont des anneaux,
**en ce que** le conducteur de liaison électrique (15) est un cylindre creux à collerette en forme de godet, la collerette présente un premier côté de collerette (21) et un deuxième côté de collerette (22), le premier connecteur (19) est réalisé au niveau du cylindre creux, le premier côté de collerette (21) est disposé directement sur le premier isolateur de liaison (16) et le deuxième côté de collerette (22) est disposé directement sur le deuxième isolateur de liaison (17), et
**en ce que** l'élément de liaison (18) est un cylindre creux à collerette, le deuxième connecteur (20) est réalisé au niveau du cylindre creux et la collerette est disposée directement sur le premier isolateur de liaison (16).

10. Connecteur intercellulaire (14) selon l'une quelconque des revendications 7 à 9, **caractérisé en ce que** le premier conducteur de liaison électrique (15) et/ou l'élément de liaison (18) et/ou le premier isolateur de liaison (16) et/ou le deuxième isolateur de liaison (17) sont fabriqués d'un seul tenant et à partir d'une seule pièce.

11. Connecteur intercellulaire (14) selon l'une quelconque des revendications 7 à 10, **caractérisé**
**en ce que** le premier isolateur de liaison (16) présente des moyens de liaison pour être relié à l'élément de liaison (18) et/ou au conducteur de liaison électrique (15), et/ou en ce que le deuxième isolateur de liaison (17) présente des moyens de liaison pour être relié au conducteur de liaison électrique (15), et
**en ce que** l'élément de liaison (18) et/ou le conducteur de liaison électrique (15) sont réalisés de manière complémentaire au moyen de liaison.

12. Connecteur intercellulaire (14) selon l'une quelconque des revendications 7 à 11, **caractérisé en ce que** le premier isolateur de liaison (16) et/ou le deuxième isolateur de liaison (17) sont des pièces moulées par injection.

13. Connecteur intercellulaire (14, 26) selon l'une quelconque des revendications 1 à 12, **caractérisé en ce que** le connecteur intercellulaire (14, 26) est réalisé pour assurer l'étanchéité entre le capuchon (6, 7) de la première cellule (1) et le capuchon (7, 6) de la deuxième cellule (1).

14. Connecteur intercellulaire (26) selon la revendication 13 et l'une quelconque des revendications 1 à 6, **caractérisé en ce que** l'isolateur de liaison (29) présente des moyens d'étanchéité (24) pour assurer l'étanchéité.

15. Connecteur intercellulaire (14) selon la revendication 13 et selon l'une quelconque des revendications 7 à 12, **caractérisé en ce que** le premier isolateur de liaison (16) et/ou le deuxième isolateur de liaison (17) sont de moyens d'étanchéité (24) pour assurer l'étanchéité.

16. Connecteur intercellulaire (14, 26) selon l'une quelconque des revendications 1 à 15, **caractérisé en ce que** des évidements (30) s'étendant radialement se trouvent dans le connecteur intercellulaire (14, 26) de sorte que lorsqu'un milieu pour l'équilibrage de température de cellules (1) est amené à couler à travers le connecteur intercellulaire (14, 26), une partie du milieu s'écoule à travers les évidements (30) s'étendant radialement.

17. Connecteur intercellulaire (26) selon l'une quelconque des revendications 16 et 3, **caractérisé en ce que** les évidements (30) sont réalisés dans le cylindre creux et dans l'anneau et dans la collerette et/ou dans l'isolateur de liaison (29).

18. Connecteur intercellulaire (14) selon l'une quelconque des revendications 16 et 9, **caractérisé en ce que** les évidements (30) sont réalisés dans le cylindre creux du conducteur de liaison électrique (15) et dans la collerette et/ou dans le deuxième isolateur de liaison (17).

19. Connecteur intercellulaire (14) selon l'une quelconque des revendications 16 et 9, **caractérisé en ce que** les évidements (30) sont réalisés dans le premier isolateur de liaison (16) et/ou dans la collerette du conducteur de liaison électrique (15).

20. Module de cellule (31) comprenant au moins deux cellules (1) et au moins un connecteur intercellulaire (14, 26),
dans lequel les au moins deux cellules (1) sont connectées électriquement ensemble par ledit au moins un connecteur intercellulaire (14, 26),
**caractérisé**
**en ce que** ledit au moins un connecteur intercellulaire (14, 26) est réalisé selon l'une quelconque des revendications 1 à 19.

21. Module de cellule (31) selon la revendication 20, **caractérisé**
**en ce que** le module de cellule (31) présente un boîtier de module (32) comprenant un espace intérieur de module (33), un axe longitudinal de module (34) et un contour de section transversale intérieur (35) de l'espace intérieur de module (33), et
**en ce que** le contour de section transversale intérieur (35) est adapté aux enveloppes extérieures (4) des au moins deux cellules (1) de telle sorte que les au moins deux cellules (1) et ledit au moins un connecteur intercellulaire (14, 26) peuvent être insérés dans l'espace intérieur de module (33), les au moins deux cellules (1) sont positionnées radialement par rapport à l'axe longitudinal de module (34) dans l'espace intérieur de module (33), et un milieu pour l'équilibrage de température de cellules (1) peut être reçu entre d'une part les enveloppes extérieures (4) des au moins deux cellules (1) et ledit au moins un connecteur intercellulaire (14, 26) et d'autre part l'espace intérieur de module (33).

22. Module de cellule (31) selon la revendication 21, **caractérisé en ce qu'**un milieu pour l'équilibrage de température de cellules (1) peut être amené à s'écouler entre d'une part les enveloppes extérieures (4) des au moins deux cellules (1) et ledit au moins un connecteur intercellulaire (14, 26) et d'autre part l'espace intérieur de module (33).

23. Module de cellule (31) selon la revendication 21 ou 22, **caractérisé en ce que** le boîtier de module (32) est électriquement conducteur,
**en ce que** les au moins deux cellules (1) sont montées électriquement en parallèle par ledit au moins un connecteur intercellulaire (26), et
**en ce que** les enveloppes extérieures (4) des au moins deux cellules (1) sont reliées électriquement ensemble par l'espace intérieur de module (33).

24. Module de cellule (31) selon la revendication 21 ou 22, **caractérisé**
**en ce que** le boîtier de module (32) est électriquement isolant dans l'espace intérieur de module (33), et
**en ce que** les au moins deux cellules (1) sont montées électriquement en série par ledit au moins un connecteur intercellulaire (14).

25. Module de cellule (31) selon l'une quelconque des revendications 21 à 24, **caractérisé en ce que** le contour de section transversale intérieur (35) présente des nervures.

26. Module de cellule (31) selon l'une quelconque des revendications 20 à 25, **caractérisé en ce que** des accès pour la mesure de tensions et/ou de températures de cellules (1) sont réalisés dans le boîtier de module (32).

27. Module de batterie comprenant au moins deux modules de cellule (31),
**caractérisé**
**en ce qu'**au moins l'un des modules de cellule (31) est réalisé selon l'une quelconque des revendications 20 à 26.
